# EUROPEAN PATENT APPLICATION

(11) **EP 3 910 973 A1**
(43) Date of publication of application: **17.11.2021**
(21) Application number: 20741824.5
(22) Date of filing: 13.01.2020
(51) Int. Cl.: H04W 8/02

(54) **LABEL MANAGEMENT METHOD AND APPARATUS FOR TERMINAL DEVICE**

(30) Priority: 18.01.2019 CN 201910108917
(71) Applicant: Huawei Technologies Co., Ltd., Shenzhen, Guangdong 518129 (CN)
(72) Inventor: GE, Cuili, Shenzhen, Guangdong 518129 (CN); YANG, Yanmei, Shenzhen, Guangdong 518129 (CN)
(74) Representative: Gill Jennings & Every LLP
(86) International application number: PCT/CN2020/071790
(87) International publication number: WO 2020/147681

(57) **Abstract**

This application provides a label management method and apparatus for a terminal device, and the method includes: A first network device obtains a type of the terminal device, where the type of the terminal device includes an uncrewed aerial vehicle, a non-uncrewed aerial vehicle, or an undetermined type; and the first network device sends a request message to a label management device, where the request message is used to request the label management device to create a type label for the terminal device, and the request message includes an identifier of the terminal device. The label management device creates and stores the type label for the terminal device, and subsequently, the first network device or another device may query the type label of the terminal device by using the identifier of the terminal device, thereby avoiding repeatedly identifying the type of the terminal device.

## Description

This application claims priority to Chinese Patent Application No. 2019101089176, filed with the Chinese Patent Office on January 18, 2019 and entitled "LABEL MANAGEMENT METHOD AND APPARATUS FOR TERMINAL DEVICE", which is incorporated herein by reference in its entirety.

### TECHNICAL FIELD

This application relates to communications technologies, and in particular, to a label management method and apparatus for a terminal device.

### BACKGROUND

An uncrewed aerial vehicle, UAV for short, is an unmanned aircraft operated by a radio remote control device and a self-provided program control apparatus. To regulate operation and flight of the uncrewed aerial vehicle, the uncrewed aerial vehicle needs to be monitored. The uncrewed aerial vehicle may be monitored by using a mobile communications network. In addition to the uncrewed aerial vehicle, there are other types of terminal devices such as a smartphone and a vehicle-mounted device in the mobile communications network, and a prerequisite for monitoring the uncrewed aerial vehicle is to identify the uncrewed aerial vehicle.

In the prior art, uncrewed aerial vehicle identification is inaccurate, and an existing method for identifying an uncrewed aerial vehicle is one-time identification. Consequently, a terminal device that has been identified is repeatedly identified, affecting a terminal of a non-uncrewed aerial vehicle type, and wasting a radio resource and a network resource.

### SUMMARY

This application provides a label management method and apparatus for a terminal device, to avoid repeatedly identifying a type of the terminal device.

A first aspect of this application provides a label management method for a terminal device, including:
a first network device obtains a type of the terminal device, where the type of the terminal device includes an uncrewed aerial vehicle, a non-uncrewed aerial vehicle, or an undetermined type; and
the first network device sends a request message to a label management device, where the request message is used to request the label management device to create a type label for the terminal device, and the request message includes an identifier of the terminal device.

In an example manner, that a first network device obtains a type of the terminal device includes:
the first network device receives a report message sent by a second network device, where the report message is used to report the type of the terminal device.

In another example manner, that a first network device obtains a type of the terminal device includes:
the first network device obtains the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, before the first network device obtains the type of the terminal device, the method further includes:
the first network device receives an identification indication message from the second network device, where the identification indication message is used to indicate the first network device to identify a type of an associated terminal device; and
that a first network device obtains a type of the terminal device includes:
   the first network device obtains the type of the associated terminal device based on the identification indication message.

In another example manner, before the first network device obtains the type of the terminal device, the method further includes:
the first network device receives an identification indication message from the second network device, where the identification indication message includes the identifier of the terminal device, and the identification indication message is used to indicate the first network device to identify the type of the terminal device; and
that a first network device obtains a type of the terminal device includes:
   the first network device obtains the type of the terminal device based on the identification indication message.

In still another example manner, that a first network device obtains a type of the terminal device includes:
the first network device obtains measurement feature data of the terminal device; and
the first network device determines the type of the terminal device based on a type model and the measurement feature data.

In an example manner, the request message further includes type information of the terminal device.

In an example manner, after the first network device sends the request message to the label management device, the method further includes:
the first network device receives a response message sent by the label management device, where the response message includes a label creation result.

In an example manner, the method further includes:
the first network device sends a label query request to the label management device, where the label query request includes the identifier of the terminal device; and
the first network device receives a label query response sent by the label management device, where the label query response includes the type label of the terminal device.

In an example manner, the method further includes:
the first network device sends a report message to a UTM, where the report message includes the identifier and the location information that are of the terminal device.

In an example manner, the first network device is a mobility management entity MME, a base station, an access and mobility management function AMF network element, or a network data analysis function NWDAF network element.

In an example manner, the first network device is a mobility management entity MME, and the second network device is a base station; or
the first network device is an access and mobility management function AMF network element, and the second network device is an NWDAF network element or a base station.

A second aspect of this application provides a label management method for a terminal device, including:
a label management device receives a request message sent by a first network device, where the request message is used to request the label management device to create a type label for the terminal device, and the request message includes an identifier of the terminal device; and
the label management device creates the type label for the terminal device based on the request message, where the type label of the terminal device includes an uncrewed aerial vehicle, a non-uncrewed aerial vehicle, or an undetermined type label.

In an example manner, the request message further includes type information of the terminal device.

In an example manner, after the label management device creates the type label for the terminal device based on the request message, the following is further included:
the label management device sends a response message to the first network device, where the response message includes a label creation result.

In an example manner, the method further includes:
the label management device receives a label query request sent by the first network device, where the label query request includes the identifier of the terminal device; and
the label management device sends a label query response to the first network device, where the label query response includes the type label of the terminal device.

In an example manner, the first network device is a mobility management entity MME, a base station, an access and mobility management function AMF network element, or a network data analysis function NWDAF network element.

A third aspect of this application provides a label management method for a terminal device, including:
a first network device obtains a type of the terminal device, where the type of the terminal device includes an uncrewed aerial vehicle, a non-uncrewed aerial vehicle, or an undetermined type; and
the first network device sends a report message to a second network device, where the report message is used to report the type of the terminal device.

In an example manner, that a first network device obtains a type of the terminal device includes:
the first network device receives a report message sent by the second network device, where the report message is used to report the type of the terminal device.

In another example manner, that a first network device obtains a type of the terminal device includes:
the first network device obtains the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, before the first network device obtains the type of the terminal device, the method further includes:
the first network device receives an identification indication message from the second network device, where the identification indication message is used to indicate the first network device to identify a type of an associated terminal device; and
that a first network device obtains a type of the terminal device includes:
   the first network device obtains the type of the associated terminal device based on the identification indication message.

In another example manner, before the first network device obtains the type of the terminal device, the method further includes:
the first network device receives an identification indication message from the second network device, where the identification indication message includes an identifier of the terminal device, and the identification indication message is used to indicate the first network device to identify the type of the terminal device; and
that a first network device obtains a type of the terminal device includes:
   the first network device obtains the type of the terminal device based on the identification indication message.

In an example manner, when the first network device is a base station, the second network device is a mobility management entity MME or a mobility management function AMF network element; or
when the first network device is a network data analysis function NWDAF network element, the second network device is an AMF network element.

A fourth aspect of this application provides a label management method for a terminal device, including:
a first network device obtains a type of the terminal device, where the type of the terminal device includes an uncrewed aerial vehicle, a non-uncrewed aerial vehicle, or an undetermined type;
the first network device sends a request message to a label management device, where the request message is used to request the label management device to create a type label for the terminal device, and the request message includes an identifier of the terminal device; and
the label management device creates the type label for the terminal device based on the request message, where the type label of the terminal device includes an uncrewed aerial vehicle, a non-uncrewed aerial vehicle, or an undetermined type label.

In an example manner, that a first network device obtains a type of the terminal device includes:
the first network device obtains the type of the terminal device based on information about the terminal device.

In an example manner, that a first network device obtains a type of the terminal device includes:
the first network device receives a report message sent by a second network device, where the report message is used to report the type of the terminal device.

In an example manner, the method further includes:
the second network device sends an identification indication message to the first network device, where the identification indication message is used to indicate the first network device to identify a type of an associated terminal device; and
correspondingly, that a first network device obtains a type of the terminal device includes:
   the first network device obtains the type of the associated terminal device based on the identification indication message.

In an example manner, the method further includes:
the second network device sends an identification indication message to the first network device, where the identification indication message includes the identifier of the terminal device, and the identification indication message is used to indicate the first network device to identify the type of the terminal device; and
correspondingly, that a first network device obtains a type of the terminal device includes:
   the first network device obtains the type of the terminal device based on the identification indication message.

In an example manner, that a first network device obtains a type of the terminal device includes:
the first network device obtains measurement feature data of the terminal device; and
the first network device determines the type of the terminal device based on a type model and the measurement feature data.

In an example manner, the request message further includes type information of the terminal device.

In an example manner, the method further includes:
the label management device sends a response message to the first network device, where the response message includes a label creation result.

In an example manner, the method further includes:
the first network device sends a label query request to the label management device, where the label query request includes the identifier of the terminal device; and
the label management device sends a label query response to the first network device, where the label query response includes the type label of the terminal device.

In an example manner, the method further includes:
the first network device sends a report message to a UTM, where the report message includes the identifier and the location information that are of the terminal device.

A fifth aspect of this application provides a label management method for a terminal device, including:
a first network device obtains a type of the terminal device, where the type of the terminal device includes an uncrewed aerial vehicle, a non-uncrewed aerial vehicle, or an undetermined type;
the first network device sends a report message to a second network device, where the report message is used to report the type of the terminal device; and
the second network device sends the report message to an uncrewed aerial vehicle server.

In an example manner, that a first network device obtains a type of the terminal device includes:
the first network device receives a report message sent by the second network device, where the report message is used to report the type of the terminal device.

In an example manner, the method further includes:
the second network device sends an identification indication message to the first network device, where the identification indication message is used to indicate the first network device to identify a type of an associated terminal device; and
that a first network device obtains a type of the terminal device includes:
   the first network device obtains the type of the associated terminal device based on the identification indication message.

In another example manner, the method further includes:
the second network device sends an identification indication message to the first network device, where the identification indication message includes an identifier of the terminal device, and the identification indication message is used to indicate the first network device to identify the type of the terminal device; and
that a first network device obtains a type of the terminal device includes:
   the first network device obtains the type of the terminal device based on the identification indication message.

A sixth aspect of this application provides a network device, including:
an obtaining module, configured to obtain a type of a terminal device, where the type of the terminal device includes an uncrewed aerial vehicle, a non-uncrewed aerial vehicle, or an undetermined type; and
a sending module, configured to send a request message to a label management device, where the request message is used to request the label management device to create a type label for the terminal device, and the request message includes an identifier of the terminal device.

In an example manner, the obtaining module is specifically configured to:
receive a report message sent by a second network device, where the report message is used to report the type of the terminal device.

In an example manner, the obtaining module is specifically configured to:
obtain the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, the device further includes:
a receiving module, configured to receive an identification indication message from the second network device, where the identification indication message is used to indicate the first network device to identify a type of an associated terminal device; and
the obtaining module is specifically configured to:
   obtain the type of the associated terminal device based on the identification indication message.

In an example manner, the device further includes:
a receiving module, configured to receive an identification indication message from the second network device, where the identification indication message includes the identifier of the terminal device, and the identification indication message is used to indicate the first network device to identify the type of the terminal device; and
the obtaining module is specifically configured to:
   obtain the type of the terminal device based on the identification indication message.

In an example manner, the obtaining module is specifically configured to:
obtain measurement feature data of the terminal device; and
determine the type of the terminal device based on a type model and the measurement feature data.

In an example manner, the request message further includes type information of the terminal device.

In an example manner, the device further includes:
a receiving module, configured to receive a response message sent by the label management device, where the response message includes a label creation result.

In an example manner, the device further includes:
the sending module is further configured to send a label query request to the label management device, where the label query request includes the identifier of the terminal device; and
the receiving module is configured to receive a label query response sent by the label management device, where the label query response includes the type label of the terminal device.

In an example manner, the sending module is further configured to:
send a report message to a UTM, where the report message includes the identifier and the location information that are of the terminal device.

In an example manner, the network device is a mobility management entity MME, a base station, an access and mobility management function AMF network element, or a network data analysis function NWDAF network element.

In an example manner, the network device is a mobility management entity MME, and the second network device is a base station; or
the network device is an access and mobility management function AMF network element, and the second network device is an NWDAF network element or a base station.

A seventh aspect of this application provides a label management device, including:
a receiving module, configured to receive a request message sent by a first network device, where the request message is used to request the label management device to create a type label for a terminal device, and the request message includes an identifier of the terminal device; and
a creation module, configured to create the type label for the terminal device based on the request message, where the type label of the terminal device includes an uncrewed aerial vehicle, a non-uncrewed aerial vehicle, or an undetermined type label.

In an example manner, the request message further includes type information of the terminal device.

In an example manner, after the label management device creates the type label for the terminal device based on the request message, the following is further included:
the label management device sends a response message to the first network device, where the response message includes a label creation result.

In an example manner, the device further includes a sending module;
the receiving module is further configured to receive a label query request sent by the first network device, where the label query request includes the identifier of the terminal device; and
the sending module is further configured to send a label query response to the first network device, where the label query response includes the type label of the terminal device.

In an example manner, the first network device is a mobility management entity MME, a base station, an access and mobility management function AMF network element, or a network data analysis function NWDAF network element.

An eighth aspect of this application provides a network device, including:
an obtaining module, configured to obtain a type of a terminal device, where the type of the terminal device includes an uncrewed aerial vehicle, a non-uncrewed aerial vehicle, or an undetermined type; and
a sending module, configured to send a report message to a second network device, where the report message is used to report the type of the terminal device.

In an example manner, the obtaining module is specifically configured to:
receive a report message sent by the second network device, where the report message is used to report the type of the terminal device.

In another example manner, the obtaining module is specifically configured to:
obtain the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, the device further includes:
a receiving module, configured to receive an identification indication message from the second network device, where the identification indication message is used to indicate the first network device to identify a type of an associated terminal device; and
the obtaining module is specifically configured to:
   obtain the type of the associated terminal device based on the identification indication message.

In another example manner, the device further includes:
a receiving module, configured to receive an identification indication message from the second network device, where the identification indication message includes an identifier of the terminal device, and the identification indication message is used to indicate the first network device to identify the type of the terminal device; and
the obtaining module is specifically configured to:
   the first network obtains the type of the terminal device based on the identification indication message.

In an example manner, when the first network device is a base station, the second network device is a mobility management entity MME or a mobility management function AMF network element; or
when the first network device is a network data analysis function NWDAF network element, the second network device is an AMF network element.

A ninth aspect of this application provides a network device, including a processor, a memory, and a transceiver, where the memory is configured to store instructions, the transceiver is configured to communicate with another device, and the processor is configured to execute the instructions stored in the memory, to enable the network device to perform the method according to any item of the first aspect of this application.

A tenth aspect of this application provides a label management device, including a processor, a memory, and a transceiver, where the memory is configured to store instructions, the transceiver is configured to communicate with another device, and the processor is configured to execute the instructions stored in the memory, to enable the label management device to perform the method according to any item of the second aspect of this application.

An eleventh aspect of this application provides a network device, including a processor, a memory, and a transceiver, where the memory is configured to store instructions, the transceiver is configured to communicate with another device, and the processor is configured to execute the instructions stored in the memory, to enable the network device to perform the method according to any item of the third aspect of this application.

A twelfth aspect of this application provides a computer-readable storage medium, where the computer-readable storage medium stores instructions, and when the instructions are executed, a computer is enabled to perform the method according to any item of the first aspect of this application.

A thirteenth aspect of this application provides a computer-readable storage medium, where the computer-readable storage medium stores instructions, and when the instructions are executed, a computer is enabled to perform the method according to any item of the second aspect of this application.

A fourteenth aspect of this application provides a computer-readable storage medium, where the computer-readable storage medium stores instructions, and when the instructions are executed, a computer is enabled to perform the method according to any item of the third aspect of this application.

A fifteenth aspect of this application provides a computer program product, where the computer program product stores instructions, and when the instructions are executed, a computer is enabled to perform the method according to any item of the first aspect of this application.

A sixteenth aspect of this application provides a computer program product, where the computer program product stores instructions, and when the instructions are executed, a computer is enabled to perform the method according to any item of the second aspect of this application.

A seventeenth aspect of this application provides a computer program product, where the computer program product stores instructions, and when the instructions are executed, a computer is enabled to perform the method according to any item of the third aspect of this application.

An eighteenth aspect of this application provides a system-on-a-chip or a system chip. The system-on-a-chip or the system chip may be applied to a network device. The system-on-a-chip or the system chip includes at least one communications interface, at least one processor, and at least one memory. The communications interface, the memory, and the processor are interconnected by using a bus. The processor executes an instruction stored in the memory, so that the network device may perform the method in either of the first aspect and the third aspect of this application.

A nineteenth aspect of this application provides a system-on-a-chip or a system chip. The system-on-a-chip or the system chip may be applied to a label management device. The system-on-a-chip or the system chip includes at least one communications interface, at least one processor, and at least one memory. The communications interface, the memory, and the processor are interconnected by using a bus. The processor executes an instruction stored in the memory, so that the label management device may perform the method in the second aspect of this application.

A twentieth aspect of this application provides a communications system, including a first network device and a label management device, where the first network device is configured to perform the method according to any item of the first aspect of the present invention, and the label management device is configured to perform the method according to any item of the second aspect of this application.

Optionally, the communications system further includes a terminal device and the foregoing second network device.

Optionally, the communications system further includes the foregoing uncrewed aerial vehicle server.

This application provides a label management method and device for a terminal device, and the method includes: A first network device obtains a type of the terminal device, where the type of the terminal device includes an uncrewed aerial vehicle, a non-uncrewed aerial vehicle, or an undetermined type; and the first network device sends a request message to a label management device, where the request message is used to request the label management device to create a type label for the terminal device, and the request message includes an identifier of the terminal device. The label management device creates and stores the type label for the terminal device, and subsequently, the first network device or another device may query the type label of the terminal device by using the identifier of the terminal device, thereby avoiding repeatedly identifying the type of the terminal device.

### BRIEF DESCRIPTION OF DRAWINGS

FIG. 1 is a schematic diagram of an existing 5G network architecture;
FIG. 2 is a schematic diagram of a 5G network architecture that is based on a service interface;
FIG. 3 is a schematic diagram of a 5G network architecture that is based on terminal device positioning;
FIG. 4 is a schematic diagram of an LTE network architecture;
FIG. 5 is a schematic diagram of an LTE network architecture that is based on terminal device positioning;
FIG. 6 is another schematic diagram of a 5G network architecture that is based on a service interface;
FIG. 7 is another schematic diagram of an LTE network architecture;
FIG. 8 is a flowchart of a label management method for a terminal device according to Embodiment 1 of this application;
FIG. 9 is a flowchart of a label management method for a terminal device according to Embodiment 2 of this application;
FIG. 10 is a signaling flowchart of a label management method for a terminal device according to Embodiment 3 of this application;
FIG. 11 is a signaling flowchart of a label management method for a terminal device according to Embodiment 4 of this application;
FIG. 12 is a signaling flowchart of a label management method for a terminal device according to Embodiment 5 of this application;
FIG. 13 is a signaling flowchart of a label management method for a terminal device according to Embodiment 6 of this application;
FIG. 14 is a signaling flowchart of a label management method for a terminal device according to Embodiment 7 of this application;
FIG. 15 is a flowchart of a label management method for a terminal device according to Embodiment 8 of this application;
FIG. 16 is a schematic structural diagram of a network device according to Embodiment 9 of this application;
FIG. 17 is a schematic structural diagram of a label management device according to Embodiment 10 of this application;
FIG. 18 is a schematic structural diagram of a network device according to Embodiment 11 of this application;
FIG. 19 is a schematic structural diagram of a network device according to Embodiment 12 of this application; and
FIG. 20 is a schematic structural diagram of a label management device according to Embodiment 13 of this application.

### DESCRIPTION OF EMBODIMENTS

This application provides a label management method for a terminal device. The method in this application may be applied to a fifth-generation (5 Generation, 5G) mobile communications system, or may be applied to a long term evolution (Long Term Evolution, LTE) system. The 5G system is also referred to as a new radio communications system, a new radio (New Radio, NR) system, or a next-generation mobile communications system.

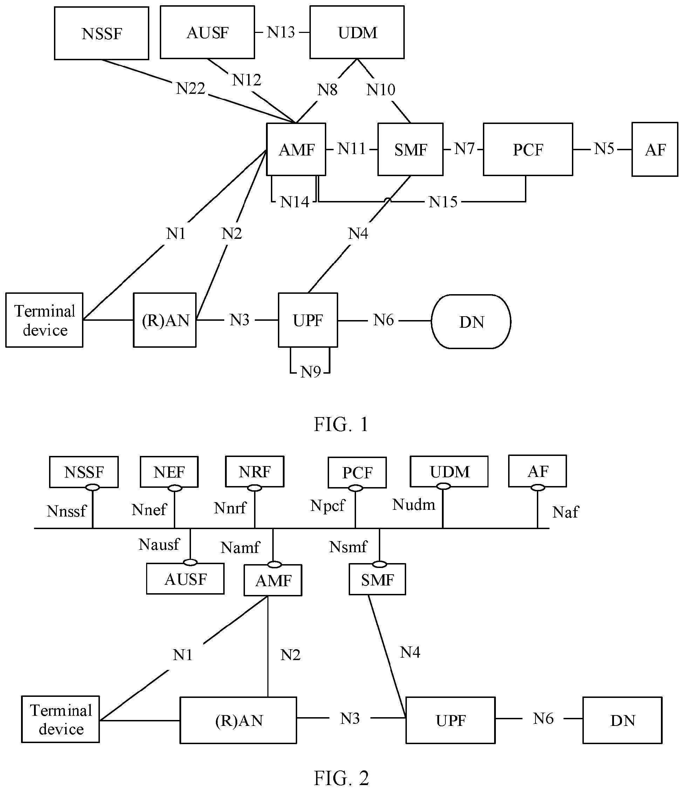

FIG. 1 is a schematic diagram of an existing 5G network architecture. The 5G network architecture includes a terminal device, an access network (access network, AN), a core network, and a data network (Data Network, DN). An access network apparatus is mainly configured to implement functions such as a radio physical layer function, resource scheduling, radio resource management, radio access control, and mobility management. A core network device may include a management device and a gateway device. The management device is mainly used for device registration, security authentication, mobility management, location management, and the like of the terminal device. The gateway device is mainly configured to establish a channel with the terminal device, and forward a data packet between the terminal device and an external data network on the channel. The data network may include a network device (for example, a device such as a server or a router), and the data network is mainly used to provide a plurality of data services for the terminal device.

The access network in a 5G system may be a radio access network (radio access network, (R)AN)). An (R)AN device in the 5G system may include a plurality of 5G-(R)AN nodes, and the 5G-(R)AN node may include an access point (access point, AP) in a non-3GPP access network such as a Wi-Fi network, a next-generation base station (which may be collectively referred to as a next-generation radio access network node (NG-RAN node), where the next-generation base station includes a new radio NodeB (NR nodeB, gNB), a next-generation evolved NodeB (NG-eNB), a central unit (central unit, CU), and a distributed unit (distributed unit, DU), a gNB in a separated form, and the like), a transmission/reception point (transmission receive point, TRP), a transmission point (transmission point, TP), or another node.

A 5G core network (5G core/new generation core, 5GC/NGC) includes a plurality of functional units such as an access and mobility management function (Access and Mobility Management Function, AMF) network element, a session management function (Session Management Function, SMF) network element, a user plane function (User Plane Function, UPF) network element, an authentication server function (Authentication Server Function, AUSF) network element, a policy control function (Policy Control Function, PCF) network element, an application function (Application Function, AF) network element, a unified data management (unified data management, UDM) network element, and a network slice selection function (Network Slice Selection Function, NSSF) network element.

The AMF network element is mainly responsible for services such as mobility management and access management. The SMF network element is mainly responsible for session management, a dynamic host configuration protocol function, user plane function selection and control, and the like. The UPF network element is mainly responsible for external connection to a data network (data network, DN), packet routing and forwarding on a user plane, packet filtering, a quality of service (quality of service, QoS) control-related function, and the like. The AUSF is mainly responsible for a function of authenticating the terminal device. The PCF network element is mainly responsible for providing a unified policy framework for network behavior management, providing a policy rule for a control plane function, obtaining registration information related to policy decision, and the like. It should be noted that these functional units may independently work, or may be combined to implement some control functions, such as access control and mobility management functions such as access authentication, security encryption, and location registration of the terminal device, and session management functions such as establishment, release, and change of a user plane transmission path.

Functional units in 5GC may communicate with each other through a next-generation (next generation, NG for short) interface. For example, UE may transmit a control plane message to the AMF network element through an NG interface 1 (N1 for short). A RAN device may establish a user plane data transmission channel with the UPF through an NG interface 3 (N3 for short). An AN/RAN device may establish a control plane signaling connection to the AMF network element through an NG interface 2 (N2 for short). The UPF may exchange information with the SMF network element through an NG interface 4 (N4 for short). The UPF may exchange user plane data with the data network DN through an NG interface 6 (N6 for short). The AMF network element may exchange information with the SMF network element through an NG interface 11 (N11 for short). The SMF network element may exchange information with the PCF network element through an NG interface 7 (N7 for short). The AMF network element may exchange information with the AUSF through an NG interface 12 (N12 for short).

It should be noted that FIG. 1 is only an example architectural diagram. In addition to the functional units shown in FIG. 1, the network architecture may further include another functional unit.

FIG. 2 is a schematic diagram of a 5G network architecture that is based on a service interface. As shown in FIG. 2, in the architecture that is based on the service interface, a core network of a 5G system further includes a network exposure function (Network Exposure Function, NEF) network element and a network repository function (Network Repository Function, NRF) network element.

In the architecture that is based on the service interface, some network elements in the 5G core network are connected by using a bus. As shown in FIG. 2, an AUSF network element, an AMF network element, an SMF network element, an AF network element, a UDM, a PCF network element, the NRF network element, the NEF network element, and an NSSF network element are interconnected by using a bus. When the network elements are interconnected by using the bus, a service interface is used. For example, the AUSF network element is connected to the bus by using an Nausf interface, the AMF network element is connected to the bus by using an Namf interface, the SMF network element is connected to the bus by using an Nsmf interface, the AF network element is connected to the bus by using an Naf interface, the UDM is connected to the bus by using an Nudm interface, the PCF network element is connected to the bus by using an Npcf interface, the NRF is connected to the bus by using an Nnrf interface, the NEF is connected to the bus by using an Nnef interface, and the NSSF is connected to the bus by using an Nnssf interface.

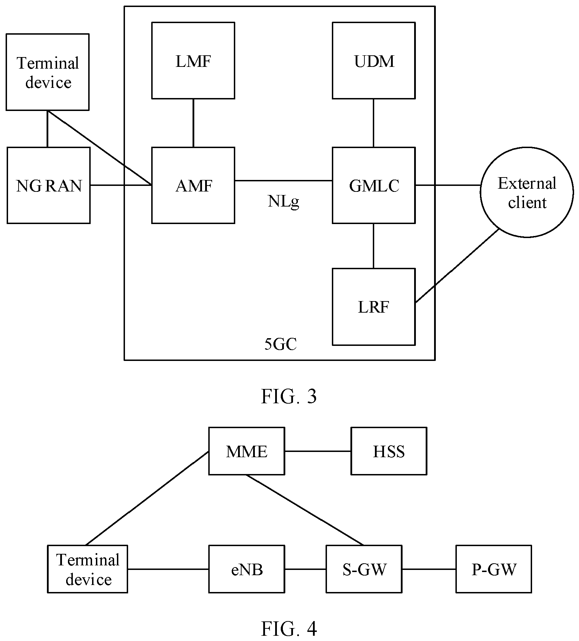

FIG. 3 is a schematic diagram of a 5G network architecture that is based on terminal device positioning. As shown in FIG. 3, the network architecture includes a terminal device, a RAN, a core network, and an external client. For an implementation of the RAN, refer to the descriptions of the architecture shown in FIG. 1. Core network elements include an AMF, a UDM, a location management function (Location Management Function, LMF), a gateway mobile location center (Gateway Mobile Location Centre, GMLC), and a location retrieval function (Location Retrieval Function, LRF) entity.

For functions of the AMF and the UDM, refer to the descriptions of the architecture shown in FIG. 1. The GLMC is configured to support a positioning service of a 3GPP network. The GLMC is a first node through which an external location program accesses a network, performs registration authorization check and requests routing information from the UDM, and after completing the registration authorization check, sends a positioning request to the AMF and receives a final location estimate (Location estimate). The LMF is configured to: determine a location of the terminal device, obtain downlink measurement information (location measurement) or obtain a location estimate of the terminal device, and obtain uplink location measurement and auxiliary information unrelated to the terminal device from the RAN.

The LRF is configured to obtain, for the external client, location information related to the terminal device, including an entity that requires positioning, temporary location information, initial positioning information, and updated positioning information. The LRF may interact with a separate GMLC, or may be integrated with the GMLC to obtain positioning information. The LRF may also interact or be integrated with another type of location server (Location Server) to obtain location information.

FIG. 4 is a schematic diagram of an LTE network architecture. As shown in FIG. 4, an access network device in an LTE system is an eNB, and a core network of the LTE system is an evolved packet core (Evolved Packet Core, EPC) network. The EPC includes a mobility management entity (mobility management entity, MME), a packet data network gateway (packet data network gateway, P-GW), a serving gateway (Serving Gateway, S-GW), a home network server (Home Subscriber Server, HSS), and the like.

The HSS is configured to store user subscription information, including user service information, authentication information, location management information, and the like. The MME is responsible for functions such as terminal access control, mobility management, session management, and network element selection (such as S-GW/P-GW selection). The SGW is a mobility anchor for handover between eNBs, and is responsible for functions such as routing and forwarding of user plane data. The PGW is responsible for functions such as internet protocol (Internet Protocol, IP) address allocation, packet data filtering, rate control and charging rules execution, and lawful interception.

Terminal devices in the 5G system and the LTE system are also referred to as user equipment (User Equipment, UE). The terminal device may be a mobile phone or a computer, or may be a cellular phone, a cordless phone, a session initiation protocol (session initiation protocol, SIP) phone, a smartphone, a wireless local loop (wireless local loop, WLL) station, a personal digital assistant (personal digital assistant, PDA), a computer, a laptop computer, a handheld communications device, a handheld computing device, a satellite wireless device, a wireless modem card, a set top box (set top box, STB), a vehicle-mounted device, a wearable device, a smart home device, or another device configured to perform communication in a wireless system.

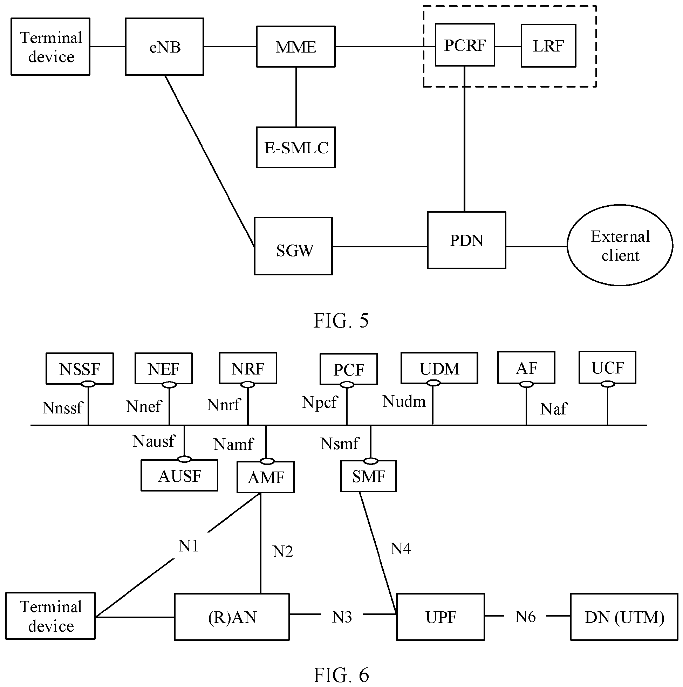

FIG. 5 is a schematic diagram of an LTE network architecture that is based on terminal device positioning. Functions of a GMLC and an LRF are the same as functions of those in the 5G network. Refer to related descriptions of the network architecture shown in FIG. 3. An E-SMLC converts, into a corresponding E-UTRAN measurement parameter, a location requirement requested by a client, selects a positioning method for a terminal device, and calculates a location estimate to obtain final location information of the terminal device.

To support uncrewed aerial vehicle communication and supervision in a mobile communications network, a core network element, namely, an uncrewed aerial vehicle service control network element (UAV control function, UCF), that is specifically used to process an uncrewed aerial vehicle service may be added to the LTE system and the 5G system. The UCF may support the following services: configuring a communication parameter for the uncrewed aerial vehicle, obtaining a non-flying area of the uncrewed aerial vehicle from a UTM, distributing auxiliary flight authorization of the uncrewed aerial vehicle, receiving an uncrewed aerial vehicle service (uncrewed aerial vehicle identification, uncrewed aerial vehicle location tracing, and the like) subscription of the UTM, and interacting with another core network element (an MME, a GMLC, or the like) to provide a subscribed uncrewed aerial vehicle service and the like for the UTM. The network element may also be a control network element that is added to the LTE system and the 5G system and that is configured to provide a service for an application service: a service control function (service control function, SCF). The control network element implements a function of the UCF.

An uncrewed aerial vehicle server is responsible for service management related to an uncrewed aerial vehicle application, and may include a service related to uncrewed aerial vehicle supervision, such as uncrewed aerial vehicle registration, flight plan approval, flight operation authorization, flight monitoring, flight alarm, and flight control, and may also include control and management of an uncrewed aerial vehicle application service, such as uncrewed aerial vehicle data collection and video data management. The uncrewed aerial vehicle server may further include some other value-added services, such as data analysis and weather condition notification.

In this application, the uncrewed aerial vehicle server may be considered as an instance (instance) of an application function (application function, AF) in the 5G system, or the uncrewed aerial vehicle server may be located in a DN as a third-party server.

In this application, the uncrewed aerial vehicle server may also be referred to as an uncrewed aerial vehicle service supplier USS (UAS service supplier), an uncrewed aerial vehicle traffic service UTS (UAS traffic service), a UTM server, or an uncrewed aerial vehicle traffic management platform.

FIG. 6 is another schematic diagram of a 5G network architecture that is based on a service interface. As shown in FIG. 6, compared with the 5G network architecture shown in FIG. 3, a UCF is added in this embodiment. The UCF is connected to and communicates with another network element in a network by using a bus, and the UTM is integrated into a DN.

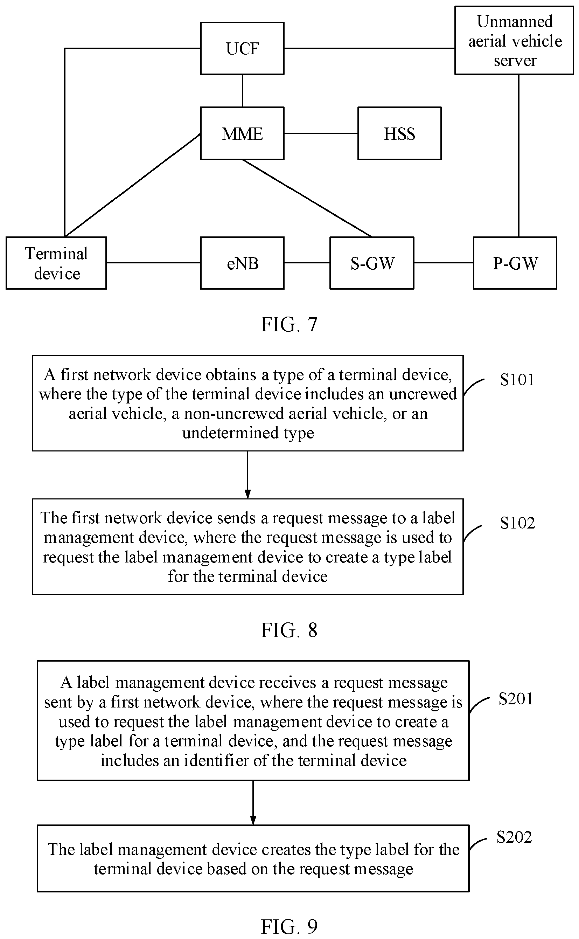

FIG. 7 is another schematic diagram of an LTE network architecture. As shown in FIG. 7, compared with the LTE network architecture shown in FIG. 4, a UCF network element is added in this embodiment, and the UCF network element is separately connected to a terminal device, an MME, and an uncrewed aerial vehicle server.

Based on network structures shown in FIG. 1 to FIG. 7, Embodiment 1 of this application provides a label management method for a terminal device. FIG. 8 is a flowchart of a label management method for a terminal device according to Embodiment 1 of this application. As shown in FIG. 8, the method provided in this embodiment includes the following steps.

Step S101: A first network device obtains a type of a terminal device, where the type of the terminal device includes an uncrewed aerial vehicle, a non-uncrewed aerial vehicle, or an undetermined type.

The first network device may be a base station or an MME in an LTE system, or may be a base station, an AMF network element, or a network data analytics function (Network Data Analytics Function, NWDAF) network element in a 5G system. The first network device may obtain the type of the terminal device in the following several manners.

Manner 1: The first network device obtains the type of the terminal device based on information about the terminal device.

Before obtaining the type of the terminal device based on the information about the terminal device, the first network device needs to obtain the information about the terminal device. Optionally, the information about the terminal device includes one or more of the following information: capability information of the terminal device, subscription information of the terminal device, type label information of the terminal device, measurement information of the terminal device, location information of the terminal device, and a type of a cell accessed by the terminal device.

The capability information of the terminal device may be carried in a radio resource control (Radio Resource Control, RRC) connection reconfiguration message or a non-access stratum (non-access stratum, NAS) message. The capability information of the terminal device is used to indicate the type of the terminal device, and the capability information of the terminal device may be over-the-air communication capability indication information, uncrewed aerial vehicle type indication information, flight capability indication information, ground common UE indication information, or the like.

If the capability information of the terminal device indicates that the type of the terminal is a non-uncrewed aerial vehicle type, the first network device may identify the type of the terminal device based on other information of the terminal device. If the capability information of the terminal device indicates that the type of the terminal device is an uncrewed aerial vehicle type, the first network device determines that the type of the terminal device is the uncrewed aerial vehicle type.

When the first network device is an eNB in the LTE system, the eNB receives label information of the terminal device from the MME, and the label information may include a type label of the terminal device. If a label type that is of the terminal device and that is included in the label information is an uncrewed aerial vehicle type or a non-uncrewed aerial vehicle type, the first network device determines that the type of the terminal device is the uncrewed aerial vehicle type or the non-uncrewed aerial vehicle type, and does not perform a subsequent step. If the label type that is of the terminal device and that is included in the label information is an undetermined type, the first network device may identify the type of the terminal device by using other information of the terminal device.

The label information of the terminal device may be carried in an S1 AP Initial Context Setup Request (SI AP initial context setup request) sent by the MME to the eNB. Alternatively, the eNB requests the subscription information of the terminal device from the MME in an S1 AP Initial Context Setup response (S1 AP initial context setup response), and the MME sends the subscription information to the eNB in an S1-AP UE Context Modification Request (S1-AP UE context modification request). The label information of the terminal device may be alternatively carried in a handover request response message or a signaling message sent by another MME to the eNB. This is not limited in this embodiment.

When the first network device is a gNB in the 5G system, the gNB receives label information of the terminal device from the AMF network element, and obtains the type of the terminal device based on the label information of the terminal device. For a specific obtaining manner, refer to a manner in which the eNB obtains the type of the terminal device.

The AMF network element may add the label information of the terminal device to an N2 message and send the N2 message to the gNB, and the N2 message is, for example, an N2 PDU session request or an N2 session request. The AMF network element may further add, in another procedure such as a registration procedure, a service request procedure, or a handover procedure, the label information of the terminal device to an N2 message to be sent to the gNB.

When the first network device is an eNB in the LTE system, the eNB receives the subscription information of the terminal device from the MME, and the subscription information of the terminal device includes indication information indicating whether the terminal device subscribes to an uncrewed aerial vehicle service. If the indication information indicates that the terminal device has subscribed to the uncrewed aerial vehicle service, the eNB determines that the type of the terminal device is the uncrewed aerial vehicle type. If the indication information indicates that the terminal device has not subscribed to the uncrewed aerial vehicle service, the eNB may identify the type of the terminal device by using other information of the terminal device.

When the first network device is a gNB in the 5G system, the eNB receives the subscription information of the terminal device from the AMF network element, and obtains the type of the terminal device based on the subscription information of the terminal device. For a specific obtaining manner, refer to a manner of the eNB.

Due to different services, a terminal device of the non-uncrewed aerial vehicle type is in a relatively fixed location or moves at a relatively slow speed in many cases. Therefore, a quantity of neighboring cells is relatively small and fixed. Because the uncrewed aerial vehicle moves at a relatively fast speed, handover between cells is relatively frequent. Therefore, a quantity of neighboring cells is relatively large. Therefore, the first network device may obtain the type of the terminal device based on the measurement information of the terminal device.

The measurement information of the terminal device may include a quantity and identifiers of neighboring cells of the terminal device. When the quantity of neighboring cells of the terminal device is relatively large, for example, is greater than a preset quantity threshold, the first network device determines that the type of the terminal device is the uncrewed aerial vehicle type. When the quantity of neighboring cells of the terminal device is less than the quantity threshold, the first network device may identify the type of the terminal device by using other information of the terminal device.

A communication feature of the terminal device may be measurement feature data of the terminal device. The first network device obtains the measurement feature data of the terminal device, and inputs the measurement feature data of the terminal device into a type model obtained through training in advance, to obtain the type of the terminal device.

The measurement information of the terminal device may further include the measurement feature data. The measurement feature data includes a multipath delay, Doppler frequency shift, a magnitude or a change trend of reference signal received power (Reference Signal Receiving Power, RSRP), and a magnitude or a change trend of a signal to interference plus noise ratio (Signal to Interference plus Noise Ratio, SINR).

Because the uncrewed aerial vehicle uses line-of-sight (Line-of-sight, LOS) propagation, multipath delay extension of the uncrewed aerial vehicle is smaller than that of another type of terminal device. Therefore, the first network device may determine, based on a magnitude of the multipath delay of the terminal device, whether the type of the terminal device is the uncrewed aerial vehicle type.

Because the uncrewed aerial vehicle moves at a high speed, Doppler frequency shift of the uncrewed aerial vehicle is larger than Doppler frequency shift of another type of terminal device. The first network device may determine, based on a magnitude of the Doppler frequency shift of the terminal device, whether the type of the terminal device is the uncrewed aerial vehicle type.

The uncrewed aerial vehicle usually flies in the air, and a terminal device of the non-uncrewed aerial vehicle type is located on the ground. Therefore, the type of the terminal device may be obtained based on the location information of the terminal device. For example, when the location information of the terminal device indicates that the terminal device is located in the air, the first network device determines that the type of the terminal device is the uncrewed aerial vehicle type. When the location information of the terminal device indicates that the terminal device is located on the ground, the first network device may identify the type of the terminal device by using other information of the terminal device.

When the first network device is an access network node, the access network node may obtain the location information of the terminal device from a minimization of drive tests (MDT) report.

In some scenarios, some cells process only a specific service, and only a terminal device having the specific service accesses the cell. Therefore, the first network device may obtain the type of the terminal device based on a type of a cell accessed by the terminal device. For example, if the cell accessed by the terminal device is a cell that serves a terminal of the uncrewed aerial vehicle type, it is determined that the type of the terminal device is the uncrewed aerial vehicle type; and if the cell accessed by the terminal device is a common cell, it is determined that the type of the terminal device is the non-uncrewed aerial vehicle type, or the type of the terminal device is identified by using other information of the terminal device.

Manner 2: When the first network device is an MME or an AMF network element, the first network device receives a report message sent by a second network device, and the report message is used to report the type of the terminal device. When the first network device is an MME, the second network device may be a base station. When the first network device is an AMF, the second network device may be a base station or an NWDAF network element.

Optionally, when the first network device is a base station, after the first network device obtains the type of the terminal device, the first network device may send the report message to the MME or the AMF network element. When the first network device is an NWDAF network element, after the first network device obtains the type of the terminal device, the first network device sends the report message to the AMF

The report information is used to report that the type of the terminal device is identified. Optionally, the report message includes an identifier of the terminal device and/or location information of the terminal device. The report message may be a UAV report. The report message may be an existing message such as an S1 AP UE context response message between the first network device and the second network device, or may be a newly defined message.

The second network device may identify the type of the terminal device based on capability information of the terminal device. A specific method used by the second network device to identify the type of the terminal device is the same as the method used by the first network device to identify the type of the terminal device. Refer to the foregoing specific method used by the first network device to identify the type of the terminal device. Details are not described herein again.

To save network resources and improve accuracy of obtaining the type of the terminal device, the first network device may identify the type of the terminal device periodically or based on event-triggering. For periodic identification, a period may be a preset time period preconfigured in the first network device, for example, 10:00 to 18:00 every day. For event-triggered identification, an event may be that a location of the terminal device is higher than a preset height, a type of a cell accessed by the terminal device is an over-the-air cell, a quantity of cells reported by the terminal device exceeds a preset value, the terminal device is frequently handed over, or a request message of another device is received.

Optionally, before the first network device obtains the type of the terminal device, the first network device receives an identification indication message from the second network device, and the identification indication message is used to indicate the first network device to identify a type of an associated terminal device. Correspondingly, the first network device identifies the type of the associated terminal device based on the identification indication message, to obtain the type of the associated terminal device. For a manner in which the first network device obtains a type of each terminal device, refer to the method in the foregoing manner 1 and manner 2. Details are not described herein again.

The identification indication message may be an uncrewed aerial vehicle (unmanned aerial vehicle, UAV) identification request message. After receiving the identification indication message, the first network device determines to obtain the type of the associated terminal device (which may be understood as all terminal devices connected to the first network device, for example, for an access network node, may be all terminal devices connected to the access network node, and for another example, for a mobility management network element, may be a terminal device that has a control plane signaling connection to the mobility management network element).

Optionally, the identification indication message includes the identifier of the terminal device, and the identification indication message is used to indicate the first network device to identify the type of the terminal device corresponding to the identifier of the terminal device. Optionally, the identification indication message may include one or more identifiers of the terminal device.

The second network device may send the identification indication message to the first network device in the following cases: When the second network device determines, based on statistics information, that a location of the terminal device is higher than a preset height, that a type of a cell accessed by the terminal device is an over-the-air cell, that a quantity of cells reported by the terminal device exceeds a preset value, or that the terminal device is frequently handed over. In this case, the second network device sends the identification indication message to the first network device.

The foregoing example is described by using an example in which the first network device obtains the type of the terminal device based on a single piece of information of the terminal device. It may be understood that the first network device may also obtain the type of the terminal device with reference to a plurality of pieces of information in capability information of the terminal device, subscription information of the terminal device, type label information of the terminal device, measurement information of the terminal device, location information of the terminal device, and a type of a cell accessed by the terminal device.

Manner 3: The first network device obtains measurement feature data of the terminal device, and determines the type of the terminal device based on a type model and the measurement feature data. The measurement feature data includes a multipath delay, Doppler frequency shift, a magnitude or a change trend of RSRP, and a magnitude or a change trend of an SINR.

Step S102: The first network device sends a request message to a label management device, where the request message is used to request the label management device to create a type label for the terminal device.

In this embodiment of this application, the label management device is added to existing network elements in the LTE system and the 5G system. The label management device is configured to create the type label for the terminal device, and store the type label of the terminal device.

The label management device may be an independent network element, or may be integrated into an existing network element, for example, integrated into a UCF network element, an SCEF network element, an NEF network element, an HSS, a UDM, or a UDR. Creating the type label for the terminal device may be understood as generating an association relationship between the terminal device and the type label, and storing the type label of the terminal device may be understood as storing an association relationship between the identifier of the terminal device and the type label.

In this embodiment, when the first network device is a base station in the LTE system, the base station may forward the request message to the label management device by using an MME. When the first network device is a base station or an NWDAF network element in the 5G system, the base station or the NWDAF network element may forward the request message to the label management device by using an AMF network element. When the first network device is an MME or an AMF network element, the MME or the AMF network element may directly send the request message to the label management device.

The request message includes the identifier of the terminal device, to indicate a specific terminal device for which the label management device creates a type label. Optionally, the request message may further include type information of the terminal device. The type information indicates a type label that is requested to be created, and the type information may be the type label, or may not be the type label. When the type information is not the type label, the type of the terminal device may be indicated by using a plurality of bits. For example, the type of the terminal device is indicated by using two-bit information, 00 indicates that the type of the terminal device is the uncrewed aerial vehicle type, 01 indicates that the type of the terminal device is the non-uncrewed aerial vehicle type, and 11 indicates that the type of the terminal device is the undetermined type. The type information of the terminal device is carried to display and indicate a type of the label that is created by the label management device for the terminal device.

When the type information is the type label, the label management device stores the association relationship between the identifier of the terminal device and the type label. When the type information is not the type label, the label management device generates the type label of the terminal device based on the type information, and stores the association relationship between the identifier of the terminal device and the type label.

When the request message does not include the type information of the terminal device, the type of the terminal device may be implicitly indicated by using different message names or message types, for example, three different types of request messages are separately used for the uncrewed aerial vehicle type, the non-uncrewed aerial vehicle type, or the undetermined type to create different type labels, for example, an uncrewed aerial vehicle label creation request message, a non-uncrewed aerial vehicle label creation request message, and an undetermined type label creation request message.

Alternatively, when the request message does not include the type information of the terminal device, a label of the uncrewed aerial vehicle type is created for the terminal device by default.

Alternatively, the label management device is an uncrewed aerial vehicle-specific network element. After receiving the request message, the label management device creates a label of the uncrewed aerial vehicle type for the terminal device by default.

Optionally, after creating the type label for the terminal device, the label management device sends a response message corresponding to the request message to the first network device. The first network device receives the response message sent by the label management device, the response message includes a label creation result, and the label creation result may include a creation success, an update success, a creation failure, or an update failure.

Optionally, the first network device sends a label query request to the label management device, the label query request includes the identifier of the terminal device, and the label query request is used to request to query the type label of the terminal device.

The label management device queries the type label of the terminal device based on the identifier of the terminal device that is included in the label query request, and sends a label query response to the first network device, and the label query response includes a query result. If the type label of the terminal device is found, the query result is the type label of the terminal device. If the type label of the terminal device is not found, the query result is that the terminal device has no corresponding type label.

After the first network device learns, based on the query result, that the terminal device has no corresponding type label, the type label may be created for the terminal device by using the method in this embodiment. When the first network device obtains the label type of the terminal, the first network device initiates, based on the obtained terminal type, a process of identifying the terminal device, so that the label of the terminal device may be updated. For example, when the obtained label type is the undetermined type, the first network device initiates identification for the terminal device. If the terminal is identified as an uncrewed aerial vehicle device this time, the first network device may update the label type of the terminal.

Optionally, the first network device further sends an identification report message to an uncrewed aerial vehicle server, and the identification report message is used to indicate that the uncrewed aerial vehicle is identified. The identification report message may include the identifier and the location information that are of the terminal device, so that the uncrewed aerial vehicle server manages the terminal device based on the identifier and the location information that are of the terminal device.

In this embodiment, the first network device obtains the type of the terminal device, where the type of the terminal device includes the uncrewed aerial vehicle, the non-uncrewed aerial vehicle, or the undetermined type; and the first network device sends the request message to the label management device, where the request message is used to request the label management device to create the type label for the terminal device, and the request message includes the identifier of the terminal device. The label management device creates and stores the type label for the terminal device, and subsequently, the first network device or another device may query the type label of the terminal device by using the identifier of the terminal device, thereby avoiding repeatedly identifying the type of the terminal device.

FIG. 9 is a flowchart of a label management method for a terminal device according to Embodiment 2 of this application. As shown in FIG. 9, the method provided in this embodiment includes the following steps.

Step S201: A label management device receives a request message sent by a first network device, where the request message is used to request the label management device to create a type label for a terminal device, and the request message includes an identifier of the terminal device.

Optionally, the request message further includes type information of the terminal device. The type information indicates a type label that is requested to be created, and the type information may be the type label, or may not be the type label.

When the request message does not include the type information of the terminal device, the first network device may implicitly indicate the type of the terminal device by using different message names or message types, for example, three different types of request messages are separately used for an uncrewed aerial vehicle type, a non-uncrewed aerial vehicle type, or an undetermined type to create different type labels, for example, an uncrewed aerial vehicle label creation request message, a non-uncrewed aerial vehicle label creation request message, and an undetermined type label creation request message.

In this embodiment, when the first network device is a base station in an LTE system, the base station may forward the request message to the label management device by using an MME. When the first network device is a base station or an NWDAF network element in a 5G system, the base station or the NWDAF network element may forward the request message to the label management device by using an AMF network element. When the first network device is an MME or an AMF network element, the MME or the AMF network element may directly send the request message to the label management device.

Step S202: The label management device creates the type label for the terminal device based on the request message.

The label management device determines, based on the request message or the type information of the terminal device that is included in the request message, a type of the label created by the terminal device, and the type label of the terminal device includes an uncrewed aerial vehicle, a non-uncrewed aerial vehicle, or an undetermined type label. Creating the type label for the terminal device may be understood as generating an association relationship between the terminal device and the type label, and storing the type label of the terminal device may be understood as storing the association relationship between the terminal device and the type label.

After receiving the request message, the label management device queries, based on the identifier of the terminal device, whether the type label has been created for the terminal device; and if the type label has not been created for the terminal device, generates an association relationship between the identifier of the terminal device and the type label; or if the type label has been created for the terminal device, updates the type label of the terminal device.

When the request message includes the type information of the terminal device, if the type information is the type label, the label management device stores the association relationship between the identifier of the terminal device and the type label; and if the type information is not the type label, the label management device generates the type label of the terminal device based on the type information, and stores the association relationship between the identifier of the terminal device and the type label.

Generally, the type label is not repeatedly created for the terminal device. A scenario of repeatedly creating the type label may be applicable to the following scenario: A type of a terminal device identified for a first time is the undetermined type, and subsequently, a type label of the terminal device is updated when it is identified that the type of the terminal device is an uncrewed aerial vehicle or a non-uncrewed aerial vehicle.

If the label management device is an uncrewed aerial vehicle-specific network element, the label management device only needs to store the identifier of the terminal device, and does not need to store a correspondence between the identifier of the terminal device and the type label.

Optionally, after creating the type label for the terminal device, the label management device sends a response message to the first network device. The response message includes a label creation result, and the label creation result may be a creation success, a creation failure, an update success, or an update failure.

Optionally, the label management device receives a label query request sent by the first network device, where the label query request includes the identifier of the terminal device; and the label management device queries the type label of the terminal device, and adds the query result to a label query response and sends the label query response to the first network device. If the type label of the terminal device is found, the query result is the type label of the terminal device. If the type label of the terminal device is not found, the query result is that the terminal device has no corresponding type label.

In this embodiment, the label management device receives the request message sent by the first network device, where the request message is used to request the label management device to create the type label for the terminal device, and the request message includes the identifier of the terminal device; and the label management device creates the type label for the terminal device based on the request message, where the type label of the terminal device includes the uncrewed aerial vehicle, the non-uncrewed aerial vehicle, or the undetermined type label. The label management device creates and stores the type label for the terminal device, and subsequently, the first network device or another device may query the type label of the terminal device by using the identifier of the terminal device, thereby avoiding repeatedly identifying the type of the terminal device.

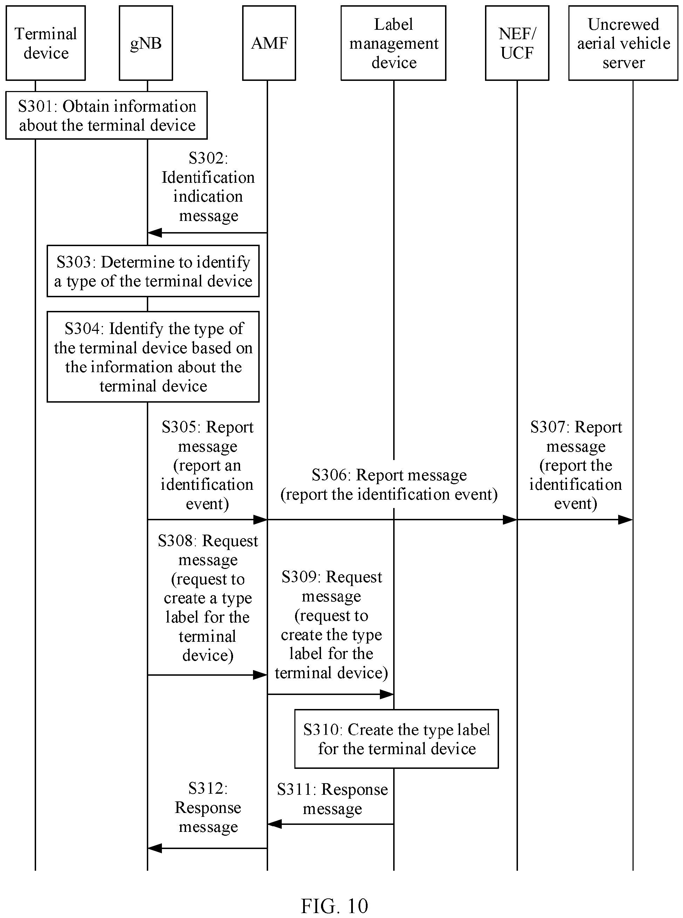

FIG. 10 is a signaling flowchart of a label management method for a terminal device according to Embodiment 3 of this application. In this embodiment, a 5G system is used as an example for description. As shown in FIG. 10, the method provided in this embodiment includes the following steps.

Step S301: A gNB obtains information about a terminal device.

The information about the terminal device includes one or more of the following information: capability information of the terminal device, subscription information of the terminal device, type label information of the terminal device, measurement information of the terminal device, location information of the terminal device, and a type of a cell accessed by the terminal device.

Step S302: An AMF network element sends an identification indication message to the gNB.

The identification indication message may be a UAV identification request. Optionally, the identification indication message includes an identifier of the terminal device. Alternatively, when the AMF network element finds, based on statistics information, that the terminal device is frequently handed over, a cell on which the terminal device camps is frequently handed over, an uncrewed aerial vehicle identification request message or an uncrewed aerial vehicle identification service subscription message of another node is received, or the AMF network element preliminarily identifies that the terminal device is a suspect uncrewed aerial vehicle, the AMF network element periodically sends the identification indication message to the gNB. The AMF network element may also send the identification indication message to the gNB on another occasion, and details are not described in this application.

Step S302 is an optional step, and step S302 may be alternatively performed before step S301.

Step S303: The gNB determines to identify a type of the terminal device.

The gNB may periodically determine to identify the type of the terminal device, or may determine, based on event-triggering, to identify the type of the terminal device. For a specific manner, refer to the descriptions in Embodiment 1. Details are not described herein again.

Step S304: The gNB identifies the type of the terminal device based on the information about the terminal device.

Step S305: The gNB sends a report message to the AMF network element.

This step is an optional step, and the report information is used to report an identification event in which the AMF network element identifies the type of the terminal device. Optionally, the report message includes the identifier of the terminal device and/or the location information of the terminal device.

The report message may be a UAV report. The report message may be an existing message such as an S1 AP UE context response message between the gNB and the AMF network element, or may be a newly defined message.

Step S306: The AMF network element sends the report message to an NEF/UCF network element.

The step is an optional step.

Step S307: The NEF/UCF network element sends the report message to an uncrewed aerial vehicle server.

The step is an optional step.

Step S308: The gNB sends a request message to the AMF network element.

The request message is used to request a label management device to create a type label for the terminal device. The request message includes the identifier of the terminal device. Optionally, the request message further includes type information of the terminal device. The request message may be a UAV label create request.

It should be noted that steps S305 and S308 are not performed in sequence, and may be simultaneously performed.

Step S309: The AMF network element sends the request message to the label management device.

Step S310: The label management device creates the type label for the terminal device.

Step S311: The label management device sends a response message to the AMF network element.

The response message includes a creation result, and the response message may be a UAV label create response.

Step S312: The AMF network element sends the response message to the gNB.

The procedure in this embodiment may also be applied to an LTE system. When the procedure is applied to the LTE system, the gNB is replaced with an eNB, the AMF network element is replaced with an MME, and a creation procedure remains unchanged. Details are not described herein.

For a specific implementation of this embodiment, refer to related descriptions in Embodiment 1 and Embodiment 2. Details are not described herein again.

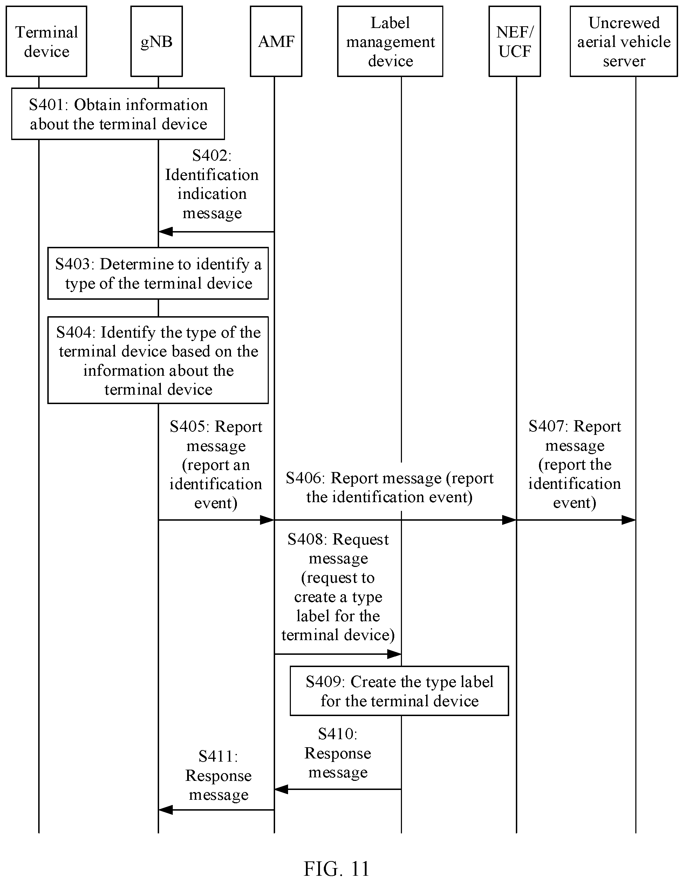

FIG. 11 is a signaling flowchart of a label management method for a terminal device according to Embodiment 4 of this application. In this embodiment, a 5G system is used as an example for description. As shown in FIG. 11, the method provided in this embodiment includes the following steps.

Step S401: A gNB obtains information about a terminal device.

The information about the terminal device includes one or more of the following information: capability information of the terminal device, subscription information of the terminal device, type label information of the terminal device, measurement information of the terminal device, location information of the terminal device, and a type of a cell accessed by the terminal device.

Step S402: An AMF network element sends an identification indication message to the gNB.

This step is an optional step, and may be alternatively performed before step S401.

Step S403: The gNB determines to identify a type of the terminal device.

The gNB may periodically determine to identify the type of the terminal device, or may determine, based on event-triggering, to identify the type of the terminal device. For a specific manner, refer to the descriptions in Embodiment 1. Details are not described herein again.

Step S404: The gNB identifies the type of the terminal device based on the information about the terminal device.

Step S405: The gNB sends a report message to the AMF network element.

The report message includes an identifier of the terminal device, may further include type information of the terminal device, and may further include the location information of the terminal device.

Step S406: The AMF network element sends the report message to an NEF/UCF.

The step is an optional step.

Step S407: The NEF/UCF network element sends the report message to an uncrewed aerial vehicle server.

The step is an optional step.

Step S408: The AMF network element sends the request message to a label management device.

Step S409: The label management device creates a type label for the terminal device.

Step S410: The label management device sends a response message to the AMF network element.

Step S411: The AMF network element sends the response message to the gNB.

Different from Embodiment 3, in Embodiment 3, after the gNB identifies the type of the terminal device, the gNB sends the request message to the label management device to trigger creation of the type label; but in this embodiment, after receiving the report message, the AMF network element sends the request message to the label management device to trigger creation of the type label. Correspondingly, in this embodiment, the report message sent by the gNB to the AMF network element needs to include the identifier of the terminal device, so that the AMF network element subsequently determines a specific terminal device for which the type label is created. The report message in Embodiment 3 may not carry the identifier of the terminal device. Other steps are the same as those in Embodiment 3, and details are not described herein again.

The procedure in this embodiment may also be applied to an LTE system. When the procedure is applied to the LTE system, the gNB is replaced with an eNB, the AMF network element is replaced with an MME, and a creation procedure remains unchanged. Details are not described herein.

For a specific implementation of this embodiment, refer to related descriptions in Embodiment 1 and Embodiment 2. Details are not described herein again.

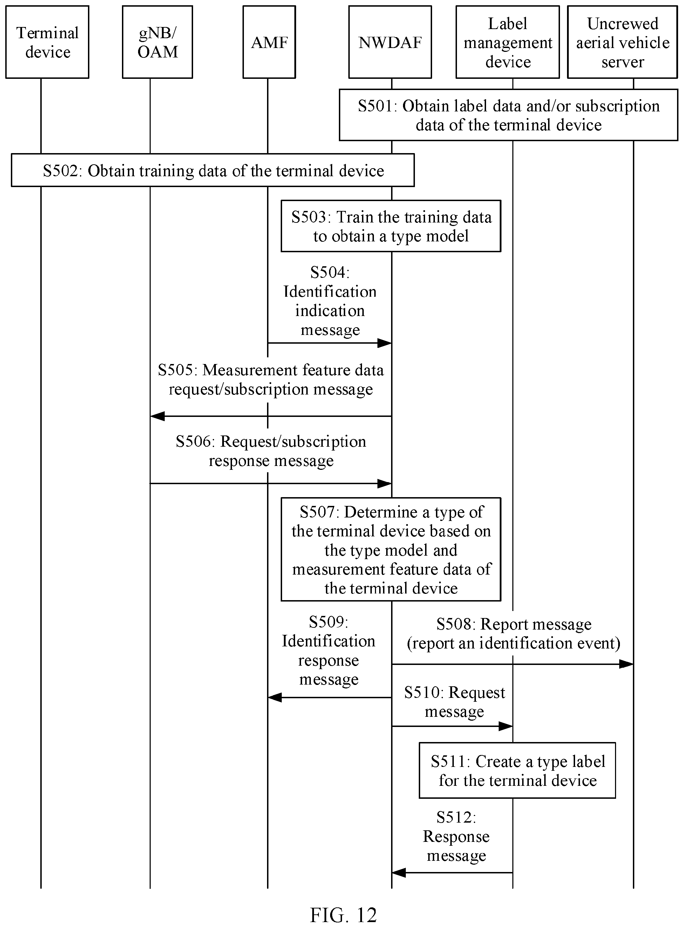

FIG. 12 is a signaling flowchart of a label management method for a terminal device according to Embodiment 5 of this application. In this embodiment, a 5G system is used as an example for description. As shown in FIG. 12, the method provided in this embodiment includes the following steps.

Step S501: An NWDAF network element obtains label data and/or subscription data of a terminal device.

The NWDAF network element may obtain the subscription data of the terminal device from a UDM, a UTM, a UCF network element, or an NEF network element, and may obtain the label data of the terminal device from a label management device.

The label data of the terminal device is used to indicate whether a type label is created for the terminal device. If the type label is created, the label data includes the type label of the terminal device. The NWDAF may subsequently determine, based on the label data and/or the subscription data of the terminal device, whether to identify a type of the terminal device.

If the label data indicates that the type label is not created, the NWDAF determines to identify the type of the terminal device. Alternatively, if the label data indicates that the type label is created, and the type label is an undetermined type or a non-uncrewed aerial vehicle type, the NWDAF determines to identify the type of the terminal device. If the label data indicates that the type label is created, and the type label is an uncrewed aerial vehicle type, the NWDAF determines not to identify the type of the terminal device.

If the subscription data indicates that the terminal device has not subscribed to an uncrewed aerial vehicle service, the NWDAF determines to identify the type of the terminal device. If the subscription data indicates that the terminal device has subscribed to the uncrewed aerial vehicle service, the NWDAF determines not to identify the type of the terminal device.

If the subscription data indicates that the terminal device has not subscribed to an uncrewed aerial vehicle service, and the label data indicates that the type of the terminal device is an undetermined type, the NWDAF determines to identify the type of the terminal device. To avoid missing an uncrewed aerial vehicle, if the subscription data indicates that the terminal device has not subscribed to the uncrewed aerial vehicle service, and the label data indicates that the type of the terminal device is a non-uncrewed aerial vehicle type, the NWDAF may also determine to identify the type of the terminal device.

Step S502: The NWDAF network element obtains training data of the terminal device.

The training data may include a large amount of measurement feature data of the terminal device, and the NWDAF network element may obtain the training data from a gNB or an operation administration and maintenance (Operation Administration and Maintenance, OAM) device.

Step S503: The NWDAF network element trains the training data to obtain a type model.

The type model is used to identify the type of the terminal device.

Steps S502 and S503 are optional steps.

Step S504: An AMF network element sends an identification indication message to the NWDAF network element.

The step is an optional step.

Step S505: The NWDAF network element sends a measurement feature data request/subscription message to the gNB/OAM

The subscription message may be UE measurement data subscribe, and the subscription message includes the identifier of the terminal device.

Step S506: The gNB/OAM sends a request/subscription response message to the NWDAF network element.

The request/subscription response message includes the measurement feature data of the terminal device, and the request/subscription response message may be UE measurement data notify.

Step S507: The NWDAF network element determines the type of the terminal device based on the type model and the measurement feature data of the terminal device.

The NWDAF inputs the measurement feature data of the terminal device into the type model obtained through training in advance, to obtain the type of the terminal device.

Step S508: The NWDAF network element sends a report message to an uncrewed aerial vehicle server.

The step is an optional step.

Optionally, the report message includes the identifier of the terminal device and/or location information of the terminal device. The NWDAF network element may forward the report message to the uncrewed aerial vehicle server through an NEF/UCF network element.

Step S509: The NWDAF network element sends an identification response message to the AMF network element.

The step is an optional step.

The identification response message is used to respond to the identification indication message sent by the AMF network element. If the identification indication message includes the identifier of the terminal device, the identification response message also includes the identifier of the terminal device. Optionally, the identification response message may further include the location information of the terminal device. If the identification indication message does not include the identifier of the terminal device, the identification response message does not include the identifier of the terminal device.

Step S510: The NWDAF network element sends a request message to the label management device.

The request message is used to request the label management device to create the type label for the terminal device.

Step S511: The label management device creates the type label for the terminal device.

Step S512: The label management device sends a response message to the NWDAF network element.

The response message includes a creation result.

In this embodiment, the NWDAF network element obtains the type model through big data analysis, and subsequently inputs the measurement feature data of the terminal device into the type model obtained through training in advance, to obtain the type of the terminal device, so that an identification result is more accurate.

For a specific implementation of this embodiment, refer to related descriptions in Embodiment 1 and Embodiment 2. Details are not described herein again.

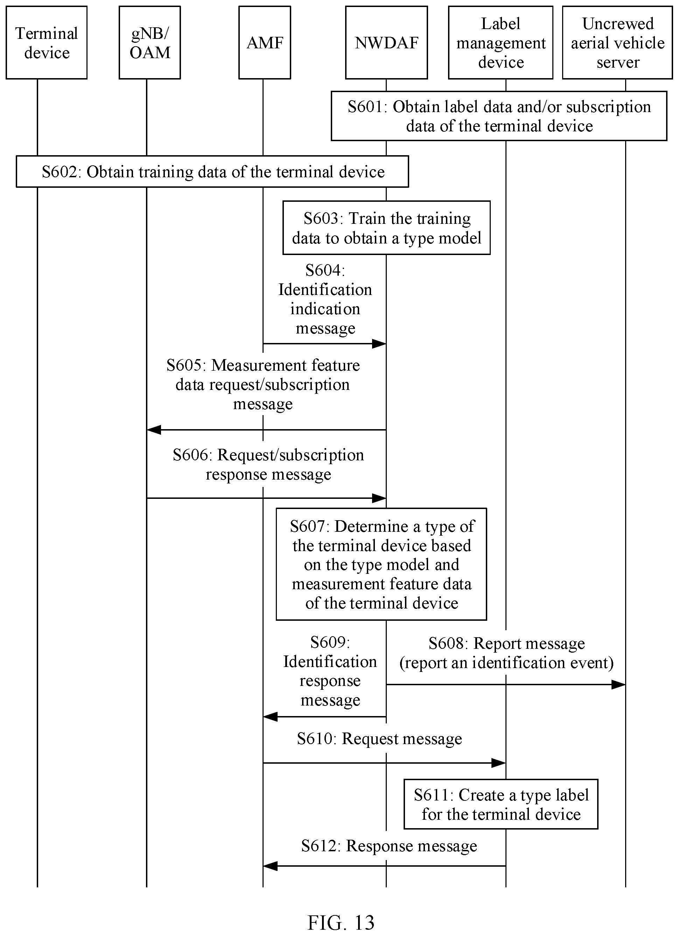

FIG. 13 is a signaling flowchart of a label management method for a terminal device according to Embodiment 6 of this application. In this embodiment, a 5G system is used as an example for description. As shown in FIG. 13, the method provided in this embodiment includes the following steps.

Step S601: An NWDAF network element obtains label data and/or subscription data of a terminal device.

Step S602: The NWDAF network element obtains training data of the terminal device.

Step S603: The NWDAF network element trains the training data to obtain a type model.

Step S604: An AMF network element sends an identification indication message to the NWDAF network element.

The step is an optional step.

Step S605: The NWDAF network element sends a measurement feature data request/subscription message to a gNB/OAM.

Step S606: The gNB/OAM sends a request/subscription response message to the NWDAF network element.

Step S607: The NWDAF network element determines a type of the terminal device based on the type model and measurement feature data of the terminal device.

Step S608: The NWDAF network element sends a report message to an uncrewed aerial vehicle server.

The step is an optional step.

Step S609: The NWDAF network element sends an identification response message to the AMF network element.

The step is an optional step.

Step S610: The AMF network element sends a request message to a label management device.

Step S611: The label management device creates a type label for the terminal device.

Step S612: The label management device sends a response message to the NWDAF network element.

A difference between this embodiment and Embodiment 5 is as follows: In Embodiment 5, after the NWDAF network element identifies the type of the terminal device, the NWDAF network element sends the request message to the label management device to trigger creation of the type label; but in this embodiment, after receiving the report message, the AMF network element sends the request message to the label management device to trigger creation of the type label. Other procedures are the same as those in Embodiment 5. Refer to related descriptions in Embodiment 5. Details are not described herein again.

For a specific implementation of this embodiment, refer to related descriptions in Embodiment 1 and Embodiment 2. Details are not described herein again.

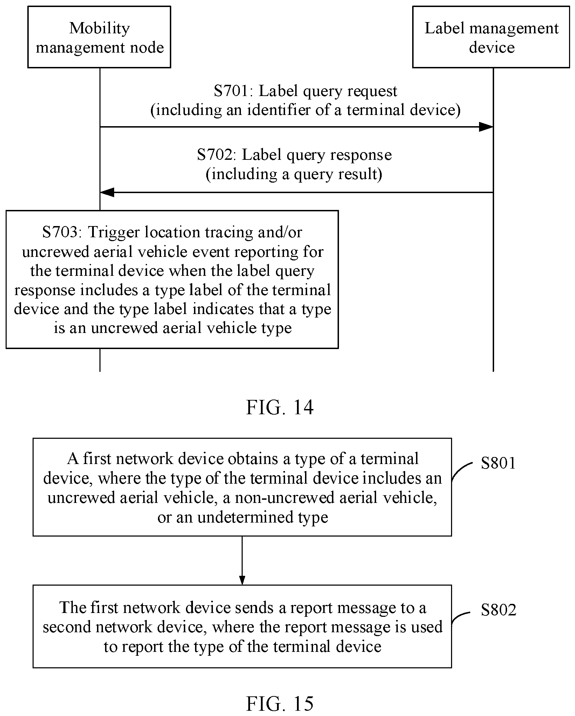

FIG. 14 is a signaling flowchart of a label management method for a terminal device according to Embodiment 7 of this application. As shown in FIG. 14, the method provided in this embodiment includes the following steps.

Step S701: A mobility management node sends a label query request to a label management device.

The label query request includes an identifier of a terminal device, to notify the label management device of a specific terminal device whose identifier needs to be queried.

When the following several cases occur, the mobility management node may check a type label of the terminal device: The terminal device registers with a network, the terminal device requests a service (service request) from the mobility management node, location information of the terminal device indicates that the terminal device is in the air, the terminal device is handed over from a ground cell to an over-the-air cell, and the terminal device is frequently handed over. In this process, the mobility management node may interact with an access network node to detect the type label of the terminal device. The mobility management node may be an MME or an AMF network element, and the access network node may be an eNB or a gNB.

Step S702: The label management device sends a label query response to the mobility management node.

The label query response includes a query result, and the query result may indicate that the type label has not been created for the terminal device, or may include the type label of the terminal device.

Step S703: Trigger location tracing and/or uncrewed aerial vehicle event reporting for the terminal device when the label query response includes the type label of the terminal device and the type label indicates that a type is an uncrewed aerial vehicle type.

FIG. 15 is a flowchart of a label management method for a terminal device according to Embodiment 8 of this application. As shown in FIG. 15, the method provided in this embodiment includes the following steps.

Step S801: A first network device obtains a type of a terminal device, where the type of the terminal device includes an uncrewed aerial vehicle, a non-uncrewed aerial vehicle, or an undetermined type.

The obtaining the type of the terminal device may be understood as identifying the type of the terminal device.

Step S802: The first network device sends a report message to a second network device, where the report message is used to report the type of the terminal device.

The first network device may be a base station or an MME in an LTE system, or may be a base station, an AMF network element, or an NWDAF network element in a 5G system. The first network device may obtain the type of the terminal device in the following several manners.

Manner 1: The first network device obtains the type of the terminal device based on information about the terminal device.

Before obtaining the type of the terminal device based on the information about the terminal device, the first network device needs to obtain the information about the terminal device. Optionally, the information about the terminal device includes one or more of the following information: capability information of the terminal device, subscription information of the terminal device, type label information of the terminal device, measurement information of the terminal device, location information of the terminal device, and a type of a cell accessed by the terminal device.

The capability information of the terminal device may be carried in an RRC connection reconfiguration message or a NAS message. The capability information of the terminal device is used to indicate the type of the terminal device, and the capability information of the terminal device may be over-the-air communication capability indication information, uncrewed aerial vehicle type indication information, flight capability indication information, ground common UE indication information, or the like.

If the capability information of the terminal device indicates that the type of the terminal is a non-uncrewed aerial vehicle type, the first network device may identify the type of the terminal device based on other information of the terminal device. If the capability information of the terminal device indicates that the type of the terminal device is an uncrewed aerial vehicle type, the first network device determines that the type of the terminal device is the uncrewed aerial vehicle type.

When the first network device is an eNB in the LTE system, the eNB receives label information of the terminal device from the MME, and the label information may include a type label of the terminal device. If a label type that is of the terminal device and that is included in the label information is an uncrewed aerial vehicle type or a non-uncrewed aerial vehicle type, the first network device determines that the type of the terminal device is the uncrewed aerial vehicle type or the non-uncrewed aerial vehicle type, and does not perform a subsequent step. If the label type that is of the terminal device and that is included in the label information is an undetermined type, the first network device may identify the type of the terminal device by using other information of the terminal device.

The label information of the terminal device may be carried in an S1 AP Initial Context Setup Request sent by the MME to the eNB. Alternatively, the eNB requests the subscription information of the terminal device from the MME in an S1 AP Initial Context Setup response, and the MME sends the subscription information to the eNB in an S 1 -AP UE Context Modification Request. The label information of the terminal device may be alternatively carried in a handover request response message or a signaling message sent by another MME to the eNB. This is not limited in this embodiment.

When the first network device is a gNB in the 5G system, the gNB receives label information of the terminal device from the AMF network element, and obtains the type of the terminal device based on the label information of the terminal device. For a specific obtaining manner, refer to a manner in which the eNB obtains the type of the terminal device.

The AMF network element may add the label information of the terminal device to an N2 message and send the N2 message to the gNB, and the N2 message is, for example, an N2 PDU session request or an N2 session request. The AMF network element may further add, in another procedure such as a registration procedure, a service request procedure, or a handover procedure, the label information of the terminal device to an N2 message to be sent to the gNB.

When the first network device is an eNB in the LTE system, the eNB receives the subscription information of the terminal device from the MME, and the subscription information of the terminal device includes indication information indicating whether the terminal device subscribes to an uncrewed aerial vehicle service. If the indication information indicates that the terminal device has subscribed to the uncrewed aerial vehicle service, the eNB determines that the type of the terminal device is the uncrewed aerial vehicle type. If the indication information indicates that the terminal device has not subscribed to the uncrewed aerial vehicle service, the eNB may identify the type of the terminal device by using other information of the terminal device.

When the first network device is a gNB in the 5G system, the eNB receives the subscription information of the terminal device from the AMF network element, and obtains the type of the terminal device based on the subscription information of the terminal device. For a specific obtaining manner, refer to a manner of the eNB.

Due to different services, a terminal device of the non-uncrewed aerial vehicle type is in a relatively fixed location or moves at a relatively slow speed in many cases. Therefore, a quantity of neighboring cells is relatively small and fixed. Because the uncrewed aerial vehicle moves at a relatively fast speed, handover between cells is relatively frequent. Therefore, a quantity of neighboring cells is relatively large. Therefore, the first network device may obtain the type of the terminal device based on the measurement information of the terminal device.

The measurement information of the terminal device may include a quantity and identifiers of neighboring cells of the terminal device. When the quantity of neighboring cells of the terminal device is relatively large, for example, is greater than a preset quantity threshold, the first network device determines that the type of the terminal device is the uncrewed aerial vehicle type. When the quantity of neighboring cells of the terminal device is less than the quantity threshold, the first network device may identify the type of the terminal device by using other information of the terminal device.

A communication feature of the terminal device may be measurement feature data of the terminal device. The first network device obtains the measurement feature data of the terminal device, and inputs the measurement feature data of the terminal device into a type model obtained through training in advance, to obtain the type of the terminal device.

The measurement information of the terminal device may further include the measurement feature data. The measurement feature data includes a multipath delay, Doppler frequency shift, a magnitude or a change trend of RSRP, and a magnitude or a change trend of an SINR.

Because the uncrewed aerial vehicle uses LOS propagation, multipath delay extension of the uncrewed aerial vehicle is smaller than that of another type of terminal device. Therefore, the first network device may determine, based on a magnitude of the multipath delay of the terminal device, whether the type of the terminal device is the uncrewed aerial vehicle type.

Because the uncrewed aerial vehicle moves at a high speed, Doppler frequency shift of the uncrewed aerial vehicle is larger than Doppler frequency shift of another type of terminal device. The first network device may determine, based on a magnitude of the Doppler frequency shift of the terminal device, whether the type of the terminal device is the uncrewed aerial vehicle type.

The uncrewed aerial vehicle usually flies in the air, and a terminal device of the non-uncrewed aerial vehicle type is located on the ground. Therefore, the type of the terminal device may be obtained based on the location information of the terminal device. For example, when the location information of the terminal device indicates that the terminal device is located in the air, the first network device determines that the type of the terminal device is the uncrewed aerial vehicle type. When the location information of the terminal device indicates that the terminal device is located on the ground, the first network device may identify the type of the terminal device by using other information of the terminal device.

When the first network device is an access network node, the access network node may obtain the location information of the terminal device from a minimization of drive tests (MDT) report.

In some scenarios, some cells process only a specific service, and only a terminal device having the specific service accesses the cell. Therefore, the first network device may obtain the type of the terminal device based on a type of a cell accessed by the terminal device. For example, if the cell accessed by the terminal device is a cell that serves a terminal of the uncrewed aerial vehicle type, it is determined that the type of the terminal device is the uncrewed aerial vehicle type; and if the cell accessed by the terminal device is a common cell, it is determined that the type of the terminal device is the non-uncrewed aerial vehicle type, or the type of the terminal device is identified by using other information of the terminal device.

Manner 2: When the first network device is an MME or an AMF network element, the first network device receives a report message sent by a second network device, and the report message is used to report the type of the terminal device. When the first network device is an MME, the second network device may be a base station. When the first network device is an AMF network element, the second network device may be a base station or an NWDAF network element.

Optionally, when the first network device is a base station, after the first network device obtains the type of the terminal device, the first network device may send the report message to the MME or the AMF network element. When the first network device is an NWDAF, after the first network device obtains the type of the terminal device, the first network device sends the report message to the AMF network element.

The report information is used to report that the first network device identifies the type of the terminal device. Optionally, the report message includes an identifier of the terminal device and/or location information of the terminal device. The report message may be a UAV report. The report message may be an existing message such as an S1 AP UE context response message between the first network device and the second network device, or may be a newly defined message.

The second network device may identify the type of the terminal device based on capability information of the terminal device. A specific method used by the second network device to identify the type of the terminal device is the same as the method used by the first network device to identify the type of the terminal device. Refer to the foregoing specific method used by the first network device to identify the type of the terminal device. Details are not described herein again.

To save network resources and improve accuracy of obtaining the type of the terminal device, the first network device may identify the type of the terminal device periodically or based on event-triggering. For periodic identification, a period may be a preset time period preconfigured in the first network device, for example, 10:00 to 18:00 every day. For event-triggered identification, an event may be that a location of the terminal device is higher than a preset height, a type of a cell accessed by the terminal device is an over-the-air cell, a quantity of cells reported by the terminal device exceeds a preset value, the terminal device is frequently handed over, or a request message of another device is received.

Optionally, before the first network device obtains the type of the terminal device, the first network device receives an identification indication message from the second network device, and the identification indication message is used to indicate the first network device to identify a type of an associated terminal device. The first network device identifies a device type of the associated terminal device based on the identification indication message, to obtain the type of the associated terminal device.

The identification indication message may be a UAV identification request message. After receiving the identification indication message, the first network device identifies the type of the associated terminal device (which may be understood as all terminal devices connected to the first network device, for example, for an access network node, may be all terminal devices connected to the access network node, and for another example, for a mobility management network element, may be a terminal device that has a control plane signaling connection to the mobility management network element).

Optionally, before the first network device obtains the type of the terminal device, the first network device receives an identification indication message from the second network device, and the identification indication message includes the identifier of the terminal device, and the identification indication message is used to indicate the first network device to identify the type of the terminal device corresponding to the identifier of the terminal device. The first network device identifies the type of the terminal device based on the identification indication message, and obtains the type of the terminal device.

Optionally, the identification indication message may include one or more identifiers of the terminal device.

The second network device may send the identification indication message to the first network device in the following cases: When the second network device determines, based on statistics information, that a location of the terminal device is higher than a preset height, that a type of a cell accessed by the terminal device is an over-the-air cell, that a quantity of cells reported by the terminal device exceeds a preset value, or that the terminal device is frequently handed over. In this case, the second network device sends the identification indication message to the first network device.

The foregoing example is described by using an example in which the first network device obtains the type of the terminal device based on a single piece of information of the terminal device. It may be understood that the first network device may also obtain the type of the terminal device with reference to a plurality of pieces of information in capability information of the terminal device, subscription information of the terminal device, type label information of the terminal device, measurement information of the terminal device, location information of the terminal device, and a type of a cell accessed by the terminal device.

Manner 3: The first network device obtains measurement feature data of the terminal device, and determines the type of the terminal device based on a type model and the measurement feature data. The measurement feature data includes a multipath delay, Doppler frequency shift, a magnitude or a change trend of RSRP, and a magnitude or a change trend of an SINR.

In steps S802, optionally, the report message includes the identifier of the terminal device and/or the location information of the terminal device. When the first network device is a base station, the second network device may be an MME or an AMF network element. When the first network device is an NWDAF network element, the second network device may be an AMF network element.

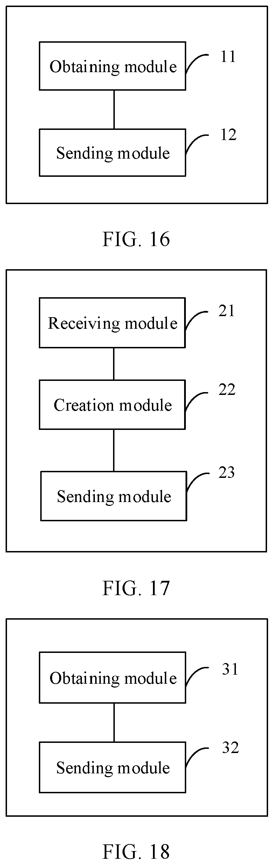

FIG. 16 is a schematic structural diagram of a network device according to Embodiment 9 of this application. As shown in FIG. 16, the network device includes:
an obtaining module 11, configured to obtain a type of a terminal device, where the type of the terminal device includes an uncrewed aerial vehicle, a non-uncrewed aerial vehicle, or an undetermined type; and
a sending module 12, configured to send a request message to a label management device, where the request message is used to request the label management device to create a type label for the terminal device, and the request message includes an identifier of the terminal device.

In an example manner, the obtaining module 11 is specifically configured to:
receive a report message sent by a second network device, where the report message is used to report the type of the terminal device.

In an example manner, the obtaining module 11 is specifically configured to:
obtain the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, the device further includes:
a receiving module, configured to receive an identification indication message from the second network device, where the identification indication message is used to indicate the first network device to identify a type of an associated terminal device; and
the obtaining module 11 is specifically configured to:
   obtain the type of the associated terminal device based on the identification indication message.

In an example manner, the device further includes:
a receiving module, configured to receive an identification indication message from the second network device, where the identification indication message includes the identifier of the terminal device, and the identification indication message is used to indicate the first network device to identify the type of the terminal device; and
the obtaining module 11 is specifically configured to:
   obtain the type of the terminal device based on the identification indication message.

In an example manner, the obtaining module 11 is specifically configured to:
obtain measurement feature data of the terminal device; and
determine the type of the terminal device based on a type model and the measurement feature data.

In an example manner, the request message further includes type information of the terminal device.

In an example manner, the device further includes:
a receiving module, configured to receive a response message sent by the label management device, where the response message includes a label creation result.

In an example manner, the device further includes a receiving module, where
the sending module is further configured to send a label query request to the label management device, where the label query request includes the identifier of the terminal device; and
the receiving module is configured to receive a label query response sent by the label management device, where the label query response includes the type label of the terminal device.

In an example manner, the sending module is further configured to:
send a report message to a UTM, where the report message includes the identifier and the location information that are of the terminal device.

In an example manner, the network device is a mobility management entity MME, a base station, an access and mobility management function AMF network element, or a network data analysis function NWDAF network element.

In an example manner, the network device is a mobility management entity MME, and the second network device is a base station; or
the network device is an access and mobility management function AMF network element, and the second network device is an NWDAF network element or a base station.

The network device in this embodiment may be configured to perform the methods performed by the first network device in the foregoing method embodiment 1 to embodiment 7. Their specific implementations and technical effects are similar, and details are not described herein again.

FIG. 17 is a schematic structural diagram of a label management device according to Embodiment 10 of this application. As shown in FIG. 17, the label management device includes:
a receiving module 21, configured to receive a request message sent by a first network device, where the request message is used to request the label management device to create a type label for the terminal device, and the request message includes an identifier of the terminal device; and
a creation module 22, configured to create the type label for the terminal device based on the request message, where the type label of the terminal device includes an uncrewed aerial vehicle, a non-uncrewed aerial vehicle, or an undetermined type label.

In an example manner, the request message further includes type information of the terminal device.

In an example manner, after the label management device creates the type label for the terminal device based on the request message, the following is further included:
the label management device sends a response message to the first network device, where the response message includes a label creation result.

In an example manner, the device further includes a sending module 23;
the receiving module 21 is further configured to receive a label query request sent by the first network device, where the label query request includes the identifier of the terminal device; and
the sending module 23 is configured to send a label query response to the first network device, where the label query response includes the type label of the terminal device.

In an example manner, the first network device is a mobility management entity MME, a base station, an access and mobility management function AMF network element, or a network data analysis function NWDAF network element.

The label management device in this embodiment may be configured to perform the methods performed by the label management device in the foregoing method embodiment 1 to embodiment 7. Their specific implementations and technical effects are similar, and details are not described herein again.

FIG. 18 is a schematic structural diagram of a network device according to Embodiment 11 of this application. As shown in FIG. 18, the network device includes:
an obtaining module 31, configured to obtain a type of a terminal device, where the type of the terminal device includes an uncrewed aerial vehicle, a non-uncrewed aerial vehicle, or an undetermined type; and
a sending module 32, configured to send a report message to a second network device, where the report message is used to report the type of the terminal device.

In an example manner, the obtaining module 31 is specifically configured to:
receive a report message sent by a second network device, where the report message is used to report the type of the terminal device.

In another example manner, the obtaining module 31 is specifically configured to:
obtain the type of the terminal device based on information about the terminal device.

In an example manner, the information about the terminal device includes one or more of the following information: capability information of the terminal device, subscription information of the terminal device, type label information of the terminal device, measurement information of the terminal device, location information of the terminal device, and a type of a cell accessed by the terminal device.

In an example manner, the device further includes:
a receiving module, configured to receive an identification indication message from the second network device, where the identification indication message is used to indicate the first network device to identify a type of an associated terminal device; and
the obtaining module 31 is specifically configured to:
   obtain the type of the associated terminal device based on the identification indication message.

In another example manner, the device further includes:
a receiving module, configured to receive an identification indication message from the second network device, where the identification indication message includes the identifier of the terminal device, and the identification indication message is used to indicate the first network device to identify the type of the terminal device; and
the obtaining module 31 is specifically configured to:
   obtain, by the first network, the type of the terminal device based on the identification indication message.

In an example manner, when the first network device is a base station, the second network device is a mobility management entity MME or a mobility management function AMF network element; or
when the first network device is a network data analysis function NWDAF network element, the second network device is an AMF network element.

The network device in this embodiment may be configured to perform the method in Embodiment 8. Their specific implementations and technical effects are similar, and details are not described herein again.

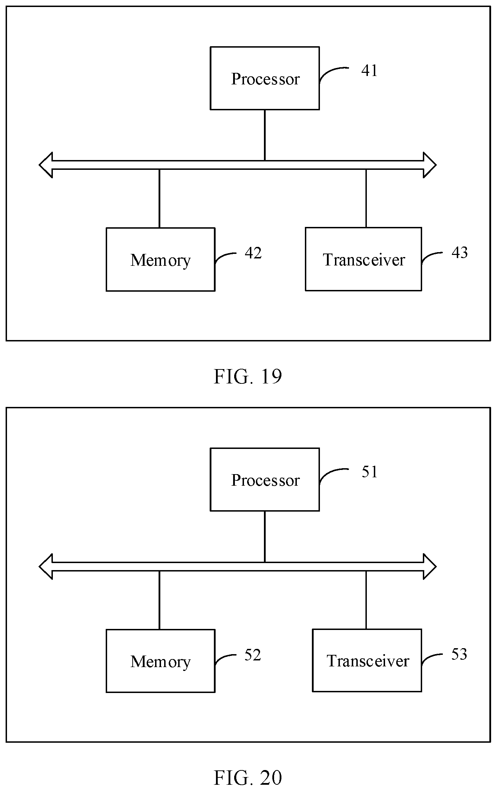

FIG. 19 is a schematic structural diagram of a network device according to Embodiment 12 of this application. As shown in FIG. 19, the network device includes a processor 41, a memory 42, and a transceiver 43. The memory 42 is configured to store instructions, the transceiver 43 is configured to communicate with another device, and the processor 41 is configured to execute the instructions stored in the memory 42, to enable the network device to perform the method performed by the first network device or the second network device in Embodiment 1 to Embodiment 8.

FIG. 20 is a schematic structural diagram of a label management device according to Embodiment 13 of this application. As shown in FIG. 20, the label management device includes a processor 51, a memory 52, and a transceiver 53. The memory 52 is configured to store instructions, the transceiver 53 is configured to communicate with another device, and the processor 51 is configured to execute the instructions stored in the memory 52, to enable the network device 51 to perform the method performed by the label management device in Embodiment 1 to Embodiment 8.

It should be understood that the processor used by the network device or the label management device in this application embodiments may be a central processing unit (CPU), a general purpose processor, a digital signal processor (DSP), an application-specific integrated circuit (ASIC), a field programmable gate array (FPGA) or another programmable logic device, a transistor logic device, a hardware component, or any combination thereof. The processor may implement or execute various example logical blocks, modules, and circuits described with reference to content disclosed in this application. The processor may be a combination of processors implementing a computing function, for example, a combination of one or more microprocessors, or a combination of the DSP and a microprocessor.

The bus in the embodiments of this application may be an industry standard architecture (Industry Standard Architecture, ISA) bus, a peripheral component interconnect (Peripheral Component, PCI) bus, an extended industry standard architecture (Extended Industry Standard Architecture, EISA) bus, or the like. The bus may be classified into an address bus, a data bus, a control bus, and the like. For ease of representation, the bus in the accompanying drawings of this application is not limited to only one bus or one type of bus.

In the several embodiments provided in this application, it should be understood that the disclosed apparatus and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in the embodiments of this application may be integrated into one processing unit, or each of the units may exist alone physically, or two or more units are integrated into one unit. The integrated unit may be implemented in a form of hardware, or may be implemented in a form of hardware in addition to a software functional unit.

When the foregoing integrated unit is implemented in a form of a software functional unit, the integrated unit may be stored in a computer-readable storage medium. The software functional unit is stored in a storage medium and includes several instructions for instructing a computer device (which may be a personal computer, a server, or a network device) or a processor to perform a part of the steps of the methods described in the embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

## Claims

1. A label management method for a terminal device, comprising:
obtaining, by a first network device, a type of the terminal device, wherein the type of the terminal device comprises an uncrewed aerial vehicle, a non-uncrewed aerial vehicle, or an undetermined type; and
sending, by the first network device, a request message to a label management device, wherein the request message is used to request the label management device to create a type label for the terminal device, and the request message comprises an identifier of the terminal device.

2. The method according to claim 1, wherein the obtaining, by a first network device, a type of the terminal device comprises:
receiving, by the first network device, a report message sent by a second network device, wherein the report message is used to report the type of the terminal device.

3. The method according to claim 1, wherein the obtaining, by a first network device, a type of the terminal device comprises:
obtaining, by the first network device, the type of the terminal device based on information about the terminal device.

4. The method according to claim 3, wherein the information about the terminal device comprises one or more of the following information: capability information of the terminal device, subscription information of the terminal device, type label information of the terminal device, measurement information of the terminal device, location information of the terminal device, and a type of a cell accessed by the terminal device.

5. The method according to any one of claims 1 to 4, before the obtaining, by a first network device, a type of the terminal device, further comprising:
receiving, by the first network device, an identification indication message from the second network device, wherein the identification indication message is used to indicate the first network device to identify a type of an associated terminal device; and
the obtaining, by a first network device, a type of the terminal device comprises:
obtaining, by the first network device, the type of the associated terminal device based on the identification indication message.

6. The method according to any one of claims 1 to 4, before the obtaining, by a first network device, a type of the terminal device, further comprising:
receiving, by the first network device, an identification indication message from the second network device, wherein the identification indication message comprises the identifier of the terminal device, and the identification indication message is used to indicate the first network device to identify the type of the terminal device; and
the obtaining, by a first network device, a type of the terminal device comprises:
obtaining, by the first network device, the type of the terminal device based on the identification indication message.

7. The method according to claim 1, wherein the obtaining, by a first network device, a type of the terminal device comprises:
obtaining, by the first network device, measurement feature data of the terminal device; and
determining, by the first network device, the type of the terminal device based on a type model and the measurement feature data.

8. The method according to any one of claims 1 to 7, wherein the request message further comprises type information of the terminal device.

9. The method according to any one of claims 1 to 7, after the sending, by the first network device, a request message to a label management device, further comprising:
receiving, by the first network device, a response message sent by the label management device, wherein the response message comprises a label creation result.

10. The method according to any one of claims 1 to 9, further comprising:
sending, by the first network device, a label query request to the label management device, wherein the label query request comprises the identifier of the terminal device; and
receiving, by the first network device, a label query response sent by the label management device, wherein the label query response comprises the type label of the terminal device.

11. The method according to any one of claims 1 to 10, further comprising:
sending, by the first network device, a report message to a UTM, wherein the report message comprises the identifier and the location information that are of the terminal device.

12. The method according to any one of claims 1 to 11, wherein the first network device is a mobility management entity MME, a base station, an access and mobility management function AMF network element, or a network data analysis function NWDAF network element.

13. The method according to claim 2, wherein the first network device is a mobility management entity MME, and the second network device is a base station; or
the first network device is an access and mobility management function AMF network element, and the second network device is an NWDAF network element or a base station.

14. A network device, comprising:
an obtaining module, configured to obtain a type of a terminal device, wherein the type of the terminal device comprises an uncrewed aerial vehicle, a non-uncrewed aerial vehicle, or an undetermined type; and
a sending module, configured to send a request message to a label management device, wherein the request message is used to request the label management device to create a type label for the terminal device, and the request message comprises an identifier of the terminal device.

15. The device according to claim 14, wherein the obtaining module is specifically configured to:
receive a report message sent by a second network device, wherein the report message is used to report the type of the terminal device.

16. The device according to claim 14, wherein the obtaining module is specifically configured to:
obtain the type of the terminal device based on information about the terminal device.

17. The device according to claim 16, wherein the information about the terminal device comprises one or more of the following information: capability information of the terminal device, subscription information of the terminal device, type label information of the terminal device, measurement information of the terminal device, location information of the terminal device, and a type of a cell accessed by the terminal device.

18. The device according to any one of claims 14 to 17, further comprising:
a receiving module, configured to receive an identification indication message from the second network device, wherein the identification indication message is used to indicate the first network device to identify a type of an associated terminal device; and
the obtaining module is specifically configured to:
obtain the type of the associated terminal device based on the identification indication message.

19. The device according to any one of claims 14 to 17, further comprising:
a receiving module, configured to receive an identification indication message from the second network device, wherein the identification indication message comprises the identifier of the terminal device, and the identification indication message is used to indicate the first network device to identify the type of the terminal device; and
the obtaining module is specifically configured to:
obtain the type of the terminal device based on the identification indication message.

20. The device according to claim 14, wherein the obtaining module is specifically configured to:
obtain measurement feature data of the terminal device; and
determine the type of the terminal device based on a type model and the measurement feature data.

21. The device according to any one of claims 14 to 20, wherein the request message further comprises type information of the terminal device.

22. The device according to any one of claims 14 to 20, further comprising:
a receiving module, configured to receive a response message sent by the label management device, wherein the response message comprises a label creation result.

23. The device according to any one of claims 14 to 22, further comprising:
the sending module is further configured to send a label query request to the label management device, wherein the label query request comprises the identifier of the terminal device; and
the receiving module is configured to receive a label query response sent by the label management device, wherein the label query response comprises the type label of the terminal device.

24. The device according to any one of claims 14 to 23, wherein the sending module is further configured to:
send a report message to a UTM, wherein the report message comprises the identifier and the location information that are of the terminal device.

25. The device according to any one of claims 14 to 24, wherein the network device is a mobility management entity MME, a base station, an access and mobility management function AMF network element, or a network data analysis function NWDAF network element.

26. The device according to claim 15, wherein the network device is a mobility management entity MME, and the second network device is a base station; or
the network device is an access and mobility management function AMF network element, and the second network device is an NWDAF network element or a base station.

27. A network device, comprising a processor, a memory, and a transceiver, wherein the memory is configured to store instructions, the transceiver is configured to communicate with another device, and the processor is configured to execute the instructions stored in the memory, to enable the network device to perform the method according to any one of claims 1 to 13.

28. A computer-readable storage medium, wherein the computer-readable storage medium stores instructions, and when the instructions are executed, a computer is enabled to perform the method according to any one of claims 1 to 13.
